# EUROPÄISCHE PATENTSCHRIFT

(11) **EP 2 836 737 B1**
(45) Veröffentlichungstag und Bekanntmachung des Hinweises auf die Patenterteilung: **31.05.2017**
(21) Anmeldenummer: 13709080.9
(22) Anmeldetag: 11.03.2013
(51) Int. Cl.: F16F 15/14, F16H 45/02

(54) **DREHSCHWINGUNGSDÄMPFUNGSANORDNUNG**
ROTARY VIBRATION DAMPING ARRANGEMENT
ENSEMBLE D'AMORTISSEMENT DES VIBRATIONS TORSIONNELLES

(30) Priorität: 10.04.2012 DE 102012205797
(43) Veröffentlichungstag der Anmeldung: 18.02.2015
(73) Patentinhaber: ZF Friedrichshafen AG, 88046 Friedrichshafen (DE)
(72) Erfinder: GROßGEBAUER, Uwe, 97250 Erlabrunn (DE); DÖGEL, Thomas, 97720 Nüdlingen (DE); STÜRMER, Armin, 97517 Rannungen (DE)
(86) Internationale Anmeldenummer: PCT/EP2013/054812
(87) Internationale Veröffentlichungsnummer: WO 2013/152908

(56) Entgegenhaltungen:
- WO-A1-2012/168026
- DE-A1-102010 053 542
- US-B1- 6 601 472

## Beschreibung

Die vorliegende Erfindung betrifft eine Drehschwingungsdämpfungsanordnung, vorzugsweise für den Antriebsstrang eines Fahrzeugs, umfassend wenigstens eine Auslenkungsmassenpendeleinheit mit
- einem um eine Drehachse drehbaren Träger,
- einer bezüglich des Trägers in Umfangsrichtung um die Drehachse auslenkbaren Auslenkungsmasse,
- einem in einem Trägerabstützbereich bezüglich des Trägers und in einem Auslenkungsmassenabstützbereich bezüglich der Auslenkungsmasse abgestützten oder abstützbaren, verformbaren Rückstellelement, wobei eine Auslenkung der Auslenkungsmasse aus einer Grund-Relativlage bezüglich des Trägers in wenigstens einer Richtung eine Verformung des Rückstellelements bewirkt,
- einem am Träger radial bewegbar getragenen und den Trägerabstützbereich bereitstellenden Abstützelement, wobei durch Bewegung des Abstützelements am Träger ein Abstand zwischen dem Trägerabstützbereich und dem Auslenkungsmassenabstützbereich veränderbar ist und das Abstützelement in Richtung zu einer radial inneren Basislage vorgespannt ist und bei Drehung des Trägers um die Drehachse entgegen der Vorspannung unter Fliehkrafteinwirkung ausgehend von der Basislage nach radial außen verlagerbar ist.

Aus der DE 10 2010 053 542 A1 ist eine Drehschwingungsdämpfungsanordnung bekannt, bei welcher Auslenkungsmassenpendeleinheiten eine ringartig um einen Träger herum angeordnete, vermittels einer Mehrzahl von an dieser festgelegten und nach radial innen sich erstreckenden, elastisch verformbaren Rückstellelementen bezüglich des Trägers in Umfangsrichtung abgestützte Auslenkungsmasse umfasst. Im Träger sind radial verlagerbar Abstützelemente vorgesehen, an welchen die nach radial innen sich erstreckenden Rückstellelemente in Umfangsrichtung an jeweiligen Trägerabstützbereichen abstützbar sind. Die Abstützelemente sind durch diesen zugeordnete und an der Auslenkungsmasse sich abstützende Vorspannfedern nach radial innen in eine Basislage vorgespannt. Bei geringer oder nicht vorhandener Fliehkraftbelastung sind die Abstützelemente unter der Vorspannwirkung in der Basislage gehalten. Mit zunehmender Drehzahl verlagern die Abstützelemente sich fliehkraftbedingt unter zunehmender Kompression der Vorspannfedern nach radial außen, wodurch die Trägerabstützbereiche, an welchen die nach radial innen von der Auslenkungsmasse sich erstreckenden Rückstellelemente sich abstützen können, nach radial außen verschoben werden. Dies verändert die zur Auslenkung zur Verfügung stehende freie Länge der Rückstellelemente zwischen ihrer Anbindung an die Auslenkungsmasse und den jeweiligen Trägerabstützbereichen, in welchen sie über die Abstützelemente bezüglich des Trägers in Umfangsrichtung abgestützt sind. Diese Variation der freien Länge beeinflusst somit auch die effektive Pendellänge, deren Verkürzung zu einer Erhöhung der Eigenfrequenz der Auslenkungsmassenpendeleinheiten führt. Dies hat zur Folge, dass drehzahlabhängig die Steifigkeit und damit auch die Eigenfrequenz der Auslenkungsmassenpendeleinheiten veränderbar ist in einem Sinne, dass mit zunehmender Drehzahl auch die Steifigkeit und somit auch die Eigenfrequenz zunimmt. Damit soll versucht werden, eine Drehzahladaption der Auslenkungsmassenpendeleinheiten an eine Schwingungsanregungsordnung zu erreichen.

Es ist die Aufgabe der vorliegenden Erfindung, eine Drehschwingungsdämpfungsanordnung vorzusehen, mit welcher über das Drehzahlspektrum hinweg eine verbesserte Adaption an eine anregende Ordnung erreichbar ist.

Erfindungsgemäß wird diese Aufgabe gelöst durch eine Drehschwingungsdämpfungsanordnung, vorzugsweise für den Antriebsstrang eines Fahrzeugs, umfassend wenigstens eine Auslenkungsmassenpendeleinheit mit
- einem um eine Drehachse drehbaren Träger,
- einer bezüglich des Trägers in Umfangsrichtung um die Drehachse auslenkbaren Auslenkungsmasse,
- einem in einem Trägerabstützbereich bezüglich des Trägers und in einem Auslenkungsmassenabstützbereich bezüglich der Auslenkungsmasse abgestützten oder abstützbaren, verformbaren Rückstellelement, wobei eine Auslenkung der Auslenkungsmasse aus einer Grund-Relativlage bezüglich des Trägers in wenigstens einer Richtung eine Verformung des Rückstellelements bewirkt,
- einem am Träger radial bewegbar getragenen und den Trägerabstützbereich bereitstellenden Abstützelement, wobei durch Bewegung des Abstützelements am Träger ein Abstand zwischen dem Trägerabstützbereich und dem Auslenkungsmassenabstützbereich veränderbar ist und das Abstützelement in Richtung zu einer radial inneren Basislage vorgespannt ist und bei Drehung des Trägers um die Drehachse entgegen der Vorspannung unter Fliehkrafteinwirkung ausgehend von der Basislage nach radial außen verlagerbar ist.

Dabei ist weiter vorgesehen, dass wenigstens in einem Drehzahlbereich ein Radialabstand des Abstützelements zur Basislage mit zunehmender Fliehkrafteinwirkung degressiv zunimmt, oder/und dass durch fliehkraftbedingte, also drehzahlabhängige, Verlagerung des Abstützelements eine Federsteifigkeit des Rückstellelements wenigstens in einem Drehzahlbereich progressiv zunimmt.

Bei dem erfindungsgemäßen Aufbau einer Drehschwingungsdämpfungsanordnung kann durch die degressive Zunahme des Radialabstands des Abstützelements zur Basislage mit zunehmender Drehzahl oder/und die progressive Zunahme der Federsteifigkeit des Rückstellelements, hervorgerufen durch die drehzahlabhängige Verlagerung des Abstützelements, gewährleistet werden, dass über die Drehzahl hinweg ein im Wesentlichen linearer Anstieg der Eigenfrequenz der Auslenkungsmassenpendeleinheit erreicht wird. Ein derartiger im Wesentlichen linearer Anstieg wiederum ermöglicht die Nachführung der Eigenfrequenz des Schwingungssystems, also der Auslenkungsmassenpendeleinheiten, in Zuordnung zu der mit zunehmender Drehzahl auch ansteigenden Anregungsfrequenz einer Anregungsordnung, beispielsweise hervorgerufen durch periodische Zündungen in einem Brennkraftmotor.

Es sei in diesem Zusammenhang darauf hingewiesen, dass im Sinne der vorliegenden Erfindung mit dem Ausdruck "degressiv zunimmt" zum Ausdruck gebracht ist, dass grundsätzlich zwar ein Anstieg, jedoch mit abnehmender Änderungsrate, d. h. mit abnehmendem Gradienten, vorhanden ist. In entsprechender Weise bringt der Ausdruck "progressiv zunimmt" zum Ausdruck, dass bei grundsätzlich vorhandenem Anstieg die Änderungsrate, also der Gradient, zunimmt.

Um eine optimierte Anpassung an eine bzw. Nachführung mit einer anregenden Ordnung zu erlangen, wird weiter vorgeschlagen, dass ein Zusammenhang zwischen der Drehzahl und der Federsteifigkeit des Rückstellelements einen parabelartigen Verlauf aufweist.

Das Rückstellverhalten des Rückstellelements kann in besonders einfacher Weise definiert beeinflusst werden, wenn das Rückstellelement eine Rückstellfeder, vorzugsweise Biegefeder, realisiert als Stabfeder, vorzugsweise mit im Wesentlichen linearer Kraftkennlinie umfasst.

Um eine definierte Positionierung des Rückstellelements in der Auslenkungsmassependelanordnung gewährleisten zu können, wird vorgeschlagen, dass das Rückstellelement bezüglich der Auslenkungsmasse oder/und bezüglich des Trägers festgelegt ist.

Eine Radialverlagerung des Abstützelements bei vergleichsweise geringer Drehzahl kann dadurch unterbunden werden, dass das Abstützelement in der Basislage mit einer Vorspannkraft beaufschlagt ist. Auf diese Art und Weise kann sichergestellt werden, dass die Auslenkungsmassenpendeleinheit eine Variation ihrer Eigenfrequenz erst dann erfährt, wenn eine bestimmte Grenzdrehzahl überschritten ist.

Die Vorspannung des Abstützelements in die bzw. in der Basislage kann dadurch erreicht werden, dass dem Abstützelement eine dieses in Richtung zur Basislage vorspannende Vorspannanordnung, vorzugsweise Vorspannfeder, zugeordnet ist.

Nach einer besonders vorteilhaften Ausgestaltung weist die Vorspannanordnung eine progressive, vorzugsweise parabelartige Vorspannkraftkennlinie auf. Auch hier bedeutet der Ausdruck "progressiv", dass mit zunehmender Belastung, also beispielsweise Kompression, der Vorspannanordnung deren Reaktionskraft überproportional, also mit steigendem Gradienten, zunimmt.

Eine definierte Bewegung des Abstützelements bei Fliehkraftbelastung kann dadurch gewährleistet werden, dass am Träger eine Führung für das Abstützelement vorgesehen ist, wobei das Abstützelement an der Führung vorzugsweise im Wesentlichen in Radialrichtung bewegbar geführt ist, vorzugsweise mit Umfangsbewegungsspiel.

Zur Reaktionskraftübertragung zwischen der Auslenkungsmasse und dem Träger kann vorgesehen sein, dass das Abstützelement zur Bereitstellung des Trägerabstützbereichs an wenigstens einer Umfangsseite des Rückstellelements einen Umfangsabstützbereich aufweist. Wenn dabei das Abstützelement an beiden Umfangsseiten des Rückstellelements einen Umfangsabstützbereich aufweist, kann an ein- und demselben Abstützelement für beide Relativauslenkungen der Auslenkungsmasse bezüglich des Trägers eine Reaktionskraftabstützung erreicht werden.

Um dabei eine reibungsbedingte Blockierung des Abstützelements am Rückstellelement zu vermeiden, wird vorgeschlagen, dass das Rückstellelement mit Umfangsbewegungsspiel zwischen den Umfangsabstützbereichen angeordnet ist.

Bei einer stabil wirkenden, baulich einfach zu realisierenden Ausgestaltung wird vorgeschlagen, dass das Abstützelement eine Durchgriffsöffnung für das Rückstellelement aufweist und entlang des Rückstellelements bewegbar ist, wobei vorzugsweise ein Massenschwerpunkt des Abstützelements im Bereich der Durchgangsöffnung liegt. Insbesondere wenn der Massenschwerpunkt im Bereich der Durchgangsöffnung liegt, kann gewährleistet werden, dass auch die Fliehkrafteinwirkung ein zu Zwängungen führendes Verkippen des Abstützelements im Wesentlichen nicht bewirken kann.

Wenn die wenigstens eine Auslenkungsmassenpendeleinheit in einem mit Fluid gefüllten oder füllbaren Gehäuse angeordnet ist, kann durch dieses Fluid gleichzeitig eine Schmierwirkung für eine möglichst reibungsfreie Bewegung des Abstützelements bezüglich des Trägers und auch bezüglich des Rückstellelements gewährleistet werden.

Um bei der erfindungsgemäßen Drehschwingungsdämpfungsanordnung die Schwingungsdämpfungs- bzw. Tilgungscharakteristik möglichst effizient nutzen zu können, wird vorgeschlagen, dass eine Mehrzahl von Auslenkungsmassenpendeleinheiten vorzugsweise mit im Wesentlichen gleichmäßigem Umfangsabstand zueinander um die Drehachse vorgesehen ist. Dabei können die Abstützelemente von wenigstens zwei, vorzugsweise allen Auslenkungsmassenpendeleinheit nach einem gemeinsamen Träger bewegbar getragen sein.

Eine bauliche Verknüpfung mehrerer Auslenkungsmassenpendeleinheiten miteinander kann erreicht werden, wenn wenigstens eine Auslenkungsmasse eine gemeinsame Auslenkungsmasse für wenigstens zwei, vorzugsweise alle Auslenkungsmassenpendeleinheiten bereitstellt. Insbesondere kann dabei vorgesehen sein, dass die gemeinsame Auslenkungsmasse einen Auslenkungsmassenring umfasst, welcher beispielsweise den Träger und dessen Drehachse ringartig umgebend angeordnet ist und an mehreren Umfangspositionen vermittels mehrerer Rückstellelemente in Umfangsrichtung bezüglich des Trägers abgestützt bzw. abstützbar ist.

Gemäß einem weiteren Aspekt umfasst Drehschwingungsdämpfungsanordnung, vorzugsweise für den Antriebsstrang eines Fahrzeugs, wenigstens eine Auslenkungsmassenpendeleinheit mit
- einem um eine Drehachse drehbaren Träger,
- einer bezüglich des Trägers in Umfangsrichtung um die Drehachse auslenkbaren Auslenkungsmasse,
- einem in einem Trägerabstützbereich bezüglich des Trägers und in einem Auslenkungsmassenabstützbereich bezüglich der Auslenkungsmasse abgestützten oder abstützbaren, verformbaren Rückstellelement, wobei eine Auslenkung der Auslenkungsmasse aus einer Grundrelativlage bezüglich des Trägers in wenigstens einer Richtung eine Verformung des Rückstellelements bewirkt,
- einem am Träger radial bewegbar getragenen und den Trägerabstützbereich bereitstellenden Abstützelement, wobei durch Bewegung des Abstützelements am Träger ein Abstand zwischen dem Trägerabstützbereich und dem Auslenkungsmassenabstützbereich veränderbar ist und das Abstützelement in Richtung zu einer radial inneren Basislage vorgespannt ist und bei Drehung des Trägers um die Drehachse entgegen der Vorspannung unter Fliehkrafteinwirkung ausgehend von der Basislage nach radial außen verlagerbar ist. Dabei ist weiter vorgesehen, dass das Abstützelement zur Bereitstellung des Trägerabstützbereichs an lediglich einer Umfangsseite des Rückstellelements einen Umfangsabstützbereich aufweist.

Durch diesen einen eigenständigen Erfindungsgedanken repräsentierenden Aspekt, der selbstverständlich auch in Verbindung mit den vorangehend diskutierten Aspekten besondere Vorteile entwickeln kann, wird es möglich, eine Umfangsabstützung nur in einer Halbphase einer jeweiligen Schwingungsperiode zu gewährleisten, so dass in der anderen Halbphase eine Entlastung des Abstützelement und dessen von Reibeffekten im Wesentlichen freie Radialverlagerung erreicht werden kann.

Die Erfindung betrifft ferner einen Antriebsstrang für ein Fahrzeug mit wenigstens einer erfindungsgemäß aufgebauten Drehschwingungsdämpfungsanordnung.

Dabei kann beispielsweise vorgesehen sein, dass der Antriebsstrang ein Anfahrelement, vorzugsweise hydrodynamischer Drehmomentwandler oder Fluidkupplung oder nasslaufende Reibungskupplung oder Trockenreibungskupplung, umfasst und dass wenigstens eine Drehschwingungsdämpfungsanordnung im Bereich des Anfahrelements vorgesehen ist.

Das Anfahrelement kann ein Turbinenrad umfassen, also beispielsweise als hydrodynamischer Drehmomentwandler ausgebildet sein, wobei dann vorteilhafterweise das Turbinenrad wenigstens einen Teil der Auslenkungsmasse einer Drehschwingungsdämpfungsanordnung bereitstellt.

Gemäß einem weiteren vorteilhaften Aspekt kann zur weitergehenden Schwingungsdämpfung vorgesehen sein, dass der Antriebsstrang wenigstens einen Drehschwingungsdämpfer mit einer Primärseite und einer gegen die Rückstellwirkung einer Dämpferfederanordnung bezüglich der Primärseite drehbaren Sekundärseite umfasst, wobei wenigstens eine Drehschwingungsdämpfungsanordnung im Bereich wenigstens eines Drehschwingungsdämpfers vorgesehen ist. Ein derartiger Drehschwingungsdämpfer mit Primärseite, Sekundärseite und dazwischen wirkender Dämpferfederanordnung, also aufgebaut beispielsweise nach Art eines Zweimassenschwungrads oder dergleichen, dient in einem Antriebsstrang grundsätzlich auch zur Drehmomentübertragung, während die vorangehend erläuterte Drehschwingungsdämpfungsanordnung bzw. deren Rückstellelement bzw. Rückstellelemente allgemein nicht zur Übertragung des in einem Antriebsstrang zu übertragenden Drehmoments genutzt wird, sondern an drehmomentübertragende und dabei zur Schwingung angeregte Komponenten angekoppelt ist, um zumindest in vorbestimmten Betriebsphasen eine im Wesentlichen freie Oszillation der Auslenkungsmasse zu ermöglichen.

Beispielsweise kann weiter vorgesehen sein, dass zwei Drehschwingungsdämpfer im Drehmomentenfluss seriell zueinander vorgesehen sind, wobei eine Sekundärseite eines Drehschwingungsdämpfers mit einer Primärseite des anderen Drehschwingungsdämpfers zum Bereitstellen einer Zwischenmasse gekoppelt ist, wobei wenigstens eine Drehschwingungsdämpfungsanordnung im Bereich der Zwischenmasse vorgesehen ist.

Die vorliegende Erfindung wird nachfolgend mit Bezug auf die beiliegenden Figuren detailliert beschrieben. Es zeigt:
- Fig. 1: eine Längsschnittansicht einer Drehschwingungsdämpfungsanordnung;
- Fig. 2: eine Axialansicht der Drehschwingungsdämpfungsanordnung der Fig. 1 in Blickrichtung II in Fig. 1;
- Fig. 3: eine der Fig. 2 entsprechende Darstellung, wobei eine Trägerscheibe einer ringartig ausgebildeten Auslenkungsmasse weggelassen ist;
- Fig. 4: in ihren Darstellungen a) und b) einen Träger der Drehschwingungsdämpfungsanordnung der Fig. 1 in perspektivischer Ansicht, betrachtet von verschiedenen Seiten;
- Fig. 5: in Ihren Darstellungen a) und b) eine ringartig ausgebildete Auslenkungsmasse im Längsschnitt, geschnitten in verschiedenen Schnittebenen;
- Fig. 6: eine perspektivische Ansicht der ringartig ausgebildeten Auslenkungsmasse;
- Fig. 7: eine Detailansicht einer Auslenkungsmassenpendeleinheit;
- Fig. 8: eine Ansicht eines Abstützelements der Auslenkungsmassenpendeleinheit, betrachtet von radial außen;
- Fig. 9: das Abstützelement der Fig. 8 in perspektivischer Ansicht;
- Fig. 10: das Abstützelement der Fig. 8 in Seitenansicht;
- Fig. 11: das Abstützelement der Fig. 8, geschnitten längs einer Linie XI-XI in Fig. 10;
- Fig. 12: die periodische Auslenkung einer Auslenkungsmasse der Drehschwingungsdämpfungsanordnung bei beidseitiger Abstützung von Rückstellelementen;
- Fig. 13: eine der Fig. 3 entsprechenden Darstellung einer insbesondere im Bereich der Abstützelemente abgewandelten Ausgestaltungsart;
- Fig. 14: eine vergrößerte Detailansicht einer Auslenkungsmassenpendeleinheit der Drehschwingungsdämpfungsanordnung der Fig. 13;
- Fig. 15: ein Abstützelement der Auslenkungsmassenpendeleinheit der Fig. 14, betrachtet von radial außen;
- Fig. 16: das Abstützelement der Fig. 15 in perspektivischer Ansicht;
- Fig. 17: das Abstützelement der Fig. 15 in Seitenansicht;
- Fig. 18: das Abstützelement der Fig. 15, geschnitten längs einer Linie XVIII-XVII in Fig. 17;
- Fig. 19: die periodische Auslenkung einer Auslenkungsmasse bei einseitiger Abstützung von Rückstellelementen;
- Fig. 20: in ihren Darstellungen a) bis d) verschiedene Ausgestaltungsarten von als Blattfedern bzw. Biegebalken ausgestalteten Rückstellelementen;
- Fig. 21: in ihren Darstellungen a) und b) ein weiteres als Blattfeder bzw. Biegebalken ausgebildetes Rückstellelement in Stirnansicht bzw. Seitenansicht;
- Fig. 22: eine Vorspannfeder für ein Abstützelement;
- Fig. 23: aufgetragen über der Drehzahl, eine im Wesentlichen linear mit der Drehzahl sich ändernde Eigenfrequenz einer Drehschwingungsdämpfungsanordnung und eine dazu über der Drehzahl parabelartig sich ändernde Steifigkeit;
- Fig. 24: die Kraft-Auslenkung-Kennlinie eines als Blattfeder bzw. Biegebalken ausgebildeten Rückstellelements;
- Fig. 25: eine über der Drehzahl sich parabelartig ändernde Steifigkeit, erreicht durch in Zuordnung zu verschiedenen Drehzahlen jeweils vorgesehene, lineare Auslenkung-Kraft-Kennlinien von Rückstellelementen;
- Fig. 26: eine in Abhängigkeit von der Radialpositionierung von Abstützelementen sich einstellende Steifigkeit von Rückstellelementen;
- Fig. 27: eine abhängig von der Drehzahl sich einstellende bzw. einzustellende Radialpositionierung von Abstützelementen mit degressiv sich verändernder Radialpositionierung;
- Fig. 28: eine Kraft-Weg-Kennlinie einer Vorspannfeder gemäß Fig. 22;
- Fig. 29: die über dem Federweg und somit drehzahlabhängig sich verändernde Fliehkrafteinwirkung auf die Kennlinie der Fig. 28;
- Fig. 30: die drehzahlabhängige Fliehkrafteinwirkung und Fluiddruckeinwirkung auf ein Abstützelement;
- Fig. 31: in Zusammenfassung aufgetragen über der Drehzahl, die die Rückstellcharakteristik einer Vorspannfeder beeinflussenden Größen;
- Fig. 32: ein Diagramm, das aufgetragen über der Drehzahl die bei einem Rückstellelement auftretende maximale Biegebelastung veranschaulicht;
- Fig. 33: in prinzipartiger Darstellung einen Antriebsstrang für ein Fahrzeug mit einer erfindungsgemäß aufgebauten Drehschwingungsdämpfungsanordnung;
- Fig. 34: eine der Fig. 33 entsprechenden Darstellung einer alternativen Ausgestaltungsart;
- Fig. 35: eine der Fig. 33 entsprechenden Darstellung einer alternativen Ausgestaltungsart;
- Fig. 36: eine der Fig. 33 entsprechenden Darstellung einer alternativen Ausgestaltungsart;
- Fig. 37: eine Teil-Längsschnittansicht eines hydrodynamischen Drehmomentwandlers mit einer darin integrierten Drehschwingungsdämpfungsanordnung mit erfindungsgemäßem Aufbau.

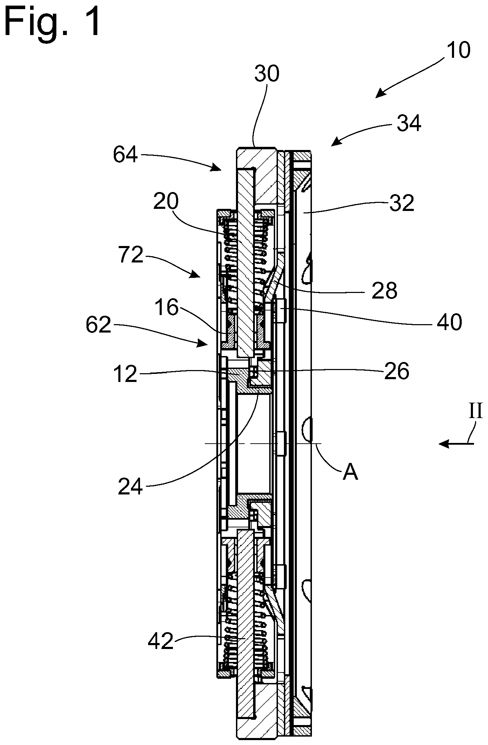

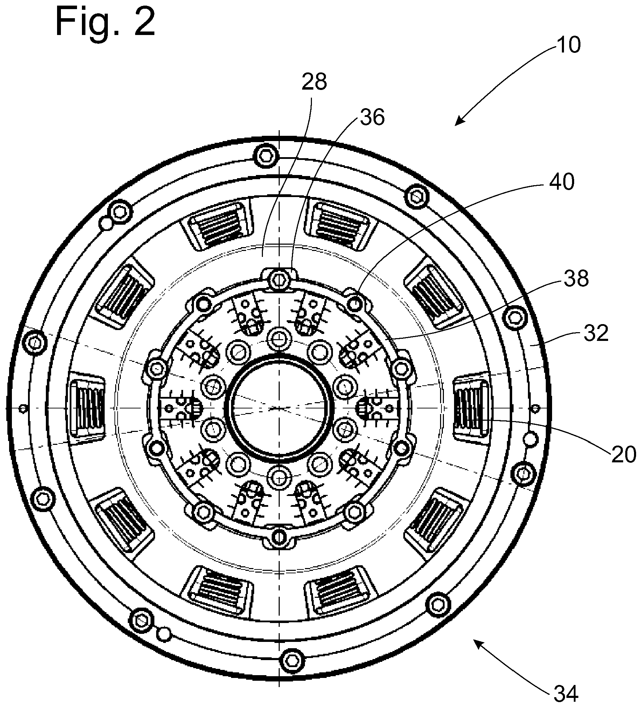

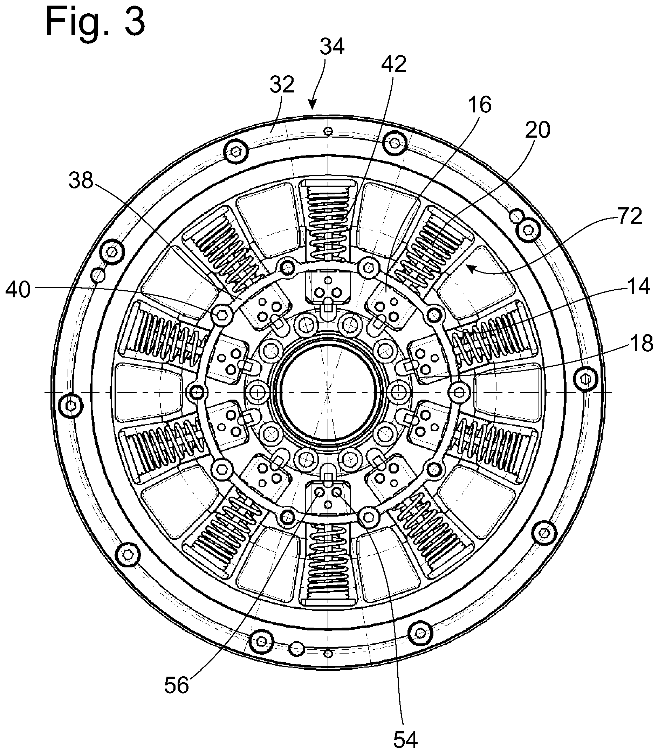

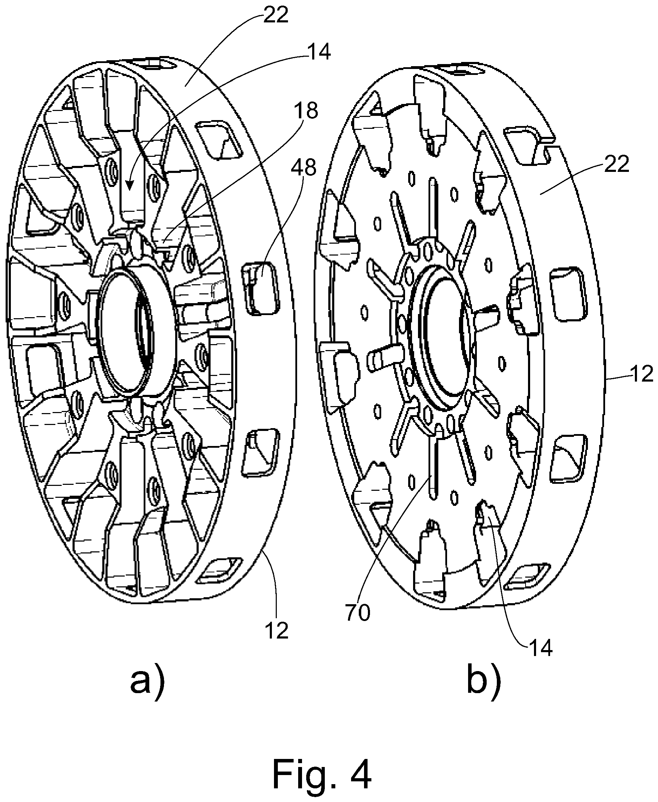

Die Fig. 1 bis 3 zeigen eine allgemein mit 10 bezeichnete Drehschwingungsdämpfungsanordnung, welche zur Erfüllung der Funktionalität eines drehzahladaptiven Tilgers in einen Antriebsstrang eines Fahrzeugs integriert bzw. an diesen angekoppelt werden kann. Die Drehschwingungsdämpfungsanordnung 10 umfasst einen durch Verschraubung an einer Antriebsstrangkomponente zur gemeinsamen Drehung damit um eine Drehachse A festzulegenden Träger 12. In diesem Träger 12 sind in den Darstellungen der Fig. 3 und 4 an mehreren Umfangspositionen vorzugsweise mit näherungsweise gleichmäßigem Umfangsabstand Führungen 14 vorgesehen, in welchen als Fliehgewichte wirksame Abstützelemente 16 radial bewegbar aufgenommen sind. Die Führungen 14 sind als im Wesentlichen radial sich erstreckende, langlochartige Aussparungen ausgebildet, welche nach radial innen hin durch eine radial innere Basislage der Abstützelemente 16 definierende Anschläge 18 begrenzt sind. Die Abstsützelemente 16 sind durch als Schraubendruckfedern ausgebildete Vorspannfedern 20 nach radial innen zur Anlage an den Anschlägen 18, also in ihre und in ihrer Basislage vorgespannt gehalten. Dabei stützen die Vorspannfedern 20 sich an einem radial äußeren ringartigen Randbereich 22 des Trägers 12 ab.

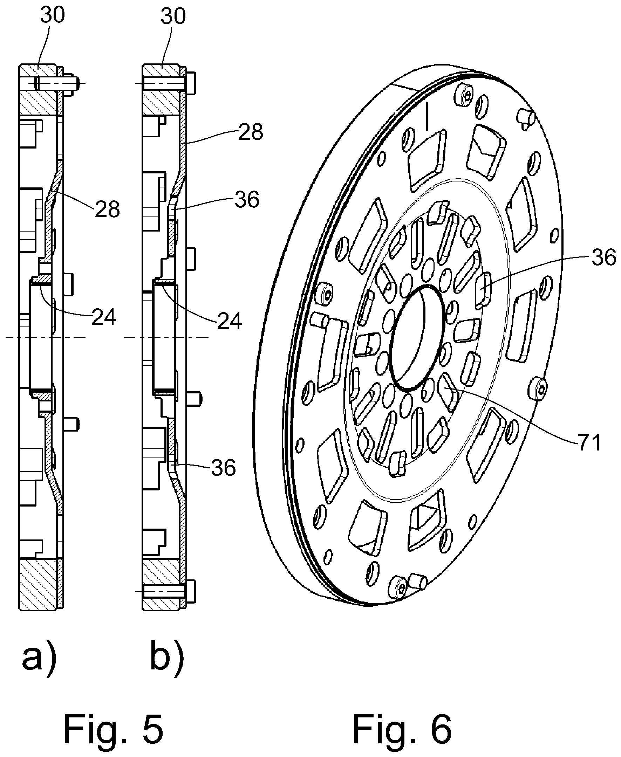

Am Träger 12 ist über ein Radiallager 24 und ein Axiallager 26 eine Trägerscheibe 28 um die Drehachse A bezüglich des Trägers 12 grundsätzlich drehbar getragen. In ihrem radial äußeren Bereich trägt die Trägerscheibe 28 beispielsweise durch Verschraubung an einer axialen Seite einen Massering 30. An der anderen axialen Seite kann beispielsweise ein weiterer Massering 32 festgelegt sein. Die Trägerscheibe 28 bildet zusammen mit dem Massering 30 und ggf. auch den Massering 32 eine allgemein mit 34 bezeichnete Auslenkungsmasse. Durch eine Mehrzahl von in Fig. 6 auch erkennbaren, in Umfangsrichtung langgestreckte Aussparungen 36 durchgreifenden und einen Axialsicherungsring 38 an der vom Träger 12 abgewandten Seite der Trägerscheibe 28 haltenden Bolzen 40, beispielsweise Schraubbolzen, ist die Trägerscheibe 28 und somit die Auslenkungsmasse 34 axial am Träger 12 gesichert. Durch das Umfangsbewegungsspiel der Bolzen 40 in den Aussparungen 36 der Trägerscheibe 28 ist die Auslenkungsmasse 34 in entsprechendem Umfangsbewegungsspiel bezüglich des Trägers um die Drehachse A drehbar, so dass durch Zusammenwirkung der Bolzen 40 mit den Aussparungen 36 eine Relativdrehwinkelbegrenzung bereitgestellt ist.

Die Auslenkungsmassenanordnung 34 ist mit dem Träger 12 durch eine Mehrzahl von in Umfangsrichtung aufeinander folgenden, im Wesentlichen radial sich erstreckenden Rückstellelementen 42 zur Kraftübertragung gekoppelt. Diese hier beispielsweise als Blattfedern bzw. allgemein als Biegebalken ausgebildeten Rückstellelemente 42 sind in ihrem radial äußeren Bereich 44 durch eine jeweilige Klemmanordnung 46 am Massering 30 festgelegt. Ausgehend von dieser Festlegung erstrecken sie sich nach radial innen durch Öffnungen 48 im Randbereich 22 des Trägers 12 hindurch in eine jeweilige Vorspannfeder 20 hinein.

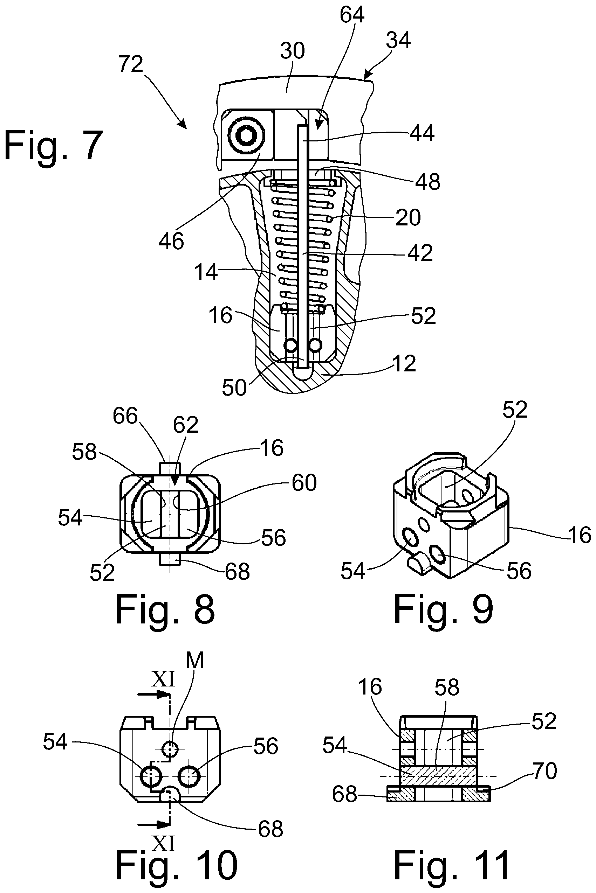

Wie die Fig. 7 dies veranschaulicht, erstreckt sich das bzw. jedes Rückstellelement 42 mit seinem radial inneren Endbereich 50 in eine zentrale Öffnung 52 eines zugeordneten Abstützelements 16 hinein bzw. durch dieses hindurch. Im Bereich der Öffnung 52 sind am Abstützelement 16 in seitlichem Abstand zueinander zwei beispielsweise an Stiften 54, 56 bereitgestellte Umfangsabstützbereiche 58, 60 vorgesehen. Diese Umfangsabstützbereiche 58, 60, welche in Umfangsrichtung beidseits des radial inneren Endbereichs 50 des zugeordneten Rückstellelements 42 liegen, definieren in ihrer Gesamtheit einen Trägerabstützbereich 62, wohingegen in demjenigen Bereich, in welchem der radial äußere Endbereich 44 des Rückstellelements 42 am Massering 32 bzw. allgemein der Auslenkungsmasse 34 festgelegt ist, ein Auslenkungsmassenabstützbereich 64 gebildet ist.

Wie im Folgenden noch dargelegt, ist das Rückstellelement 42 zwischen den beiden Umfangsabstützbereichen 58, 60 mit Bewegungsspiel aufgenommen, um eine unter Fliehkrafteinwirkung auftretende Radialbewegung des Abstützelements 16 in der zugeordneten Führung 14 im Träger 12 zu ermöglichen. Um bei dieser Radialbewegung ein Verkippen des Abstützelements 16 zu verhindern, weist dieses an seinen beiden axial orientierten Seitenführungsvorsprünge 66, 68 auf, welche in zugeordnete, sich im Wesentlichen radial erstreckende Führungsaussparungen 70 des Trägers 12 bzw. 71 der Trägerscheibe 28 hinein erstrecken und darin radial bewegbar geführt bzw. aufgenommen sind. Um insbesondere durch Wechselwirkung des Führungsvorsprungs 68 mit der Trägerscheibe 28 deren Relativdrehbarkeit bezüglich des Trägers 12 nicht zu beeinträchtigen, können die Aussparungen 71 eine größere Umfangsbreite aufweisen, als die Aussparungen 70 im Träger 12. weiter kann ein unter Fliehkrafteinwirkung auftretendes Verkippen des Abstützelements 16 dadurch verhindert werden, dass dessen Massenschwerpunkt M näherungsweise zentral in der Öffnung 52 liegt.

Bei der vorangehend mit Bezug auf die Fig. 1 bis 11 hinsichtlich ihres konstruktiven Aufbaus erläuterten Drehschwingungsdämpfungsanordnung 10 bildet jeweils ein im Träger 12 radial bewegbar geführtes Abstützelement 16, das mit dieser zusammenwirkende Rückstellelement 42, die das Abstützelement 16 nach radial innen in seine in Fig. 7 erkennbare Basislage vorspannende Vorspannfeder 20 und die Auslenkungsmasse 34 jeweils eine Auslenkungsmassenpendeleinheit 72. Dabei sind in der dargestellten Ausgestaltungsform insgesamt zehn derartige Auslenkungsmassenpendeleinheiten 72 vorgesehen, wobei der Träger 12 ein gemeinsamer Träger 12 für die Abstützelemente 16 aller Auslenkungsmassenpendeleinheiten 72 ist und die Auslenkungsmasse 34 eine gemeinsame Auslenkungsmasse 34 für alle Auslenkungsmassenpendeleinheiten 72 ist. Die Prinzipien der vorliegenden Erfindung könnten grundsätzlich jedoch auch realisiert sein, wenn in Zuordnung zu jeder oder zumindest einem Teil der Auslenkungsmassenpendeleinheiten 72 ein separater bzw. eigenständiger Träger vorgesehen ist oder/und wenn in Zuordnung zu allen oder einem Teil der Auslenkungsmassenpendeleinheiten 72 eine eigenständige Auslenkungsmasse vorgesehen ist. Aus Gründen der Stabilität und zum Vermeiden ungewünschter Schwingungszustände bzw. zum Erhalt eines synchronen Schwingungsverhaltens aller Auslenkungsmassenpendeleinheiten 72 ist jedoch zumindest die Zusammenfassung aller Auslenkungsmassen zu einer gemeinsamen, ringartigen Auslenkungsmasse 34 vorteilhaft.

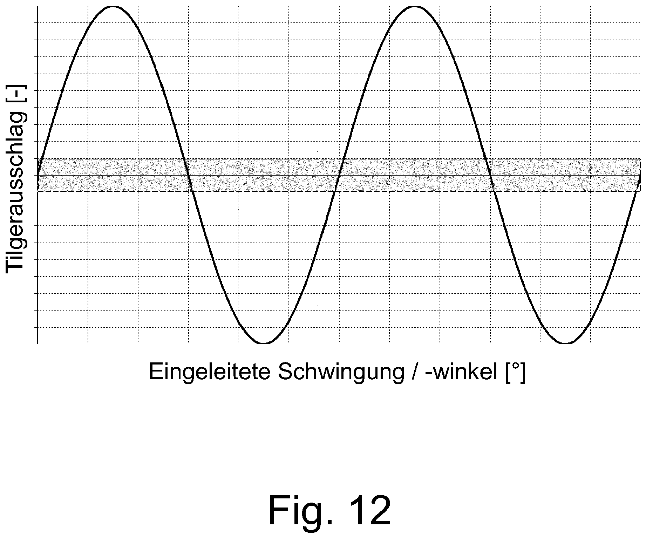

Die Fig. 12 zeigt aufgetragen über der Zeit bzw. einer eingeleiteten Schwingung das periodische Schwingungsverhalten der Auslenkungsmasse 34, in Fig. 12 allgemein als Tilgerausschlag bezeichnet. Man erkennt im Bereich des Nulldurchgangs einen grau hinterlegten Auslenkungsbereich. Dies ist der Bereich, welcher durch die spielbehaftete Aufnahme der Rückstellelemente 42 zwischen den zugeordneten Umfangsabstützbereichen 58, 60 erhalten wird. Bei periodischer Auslenkung der Auslenkungsmasse 34 und entsprechender periodischer Hin- und Herverformung der Rückstellelemente 42 wird immer im Nulldurchgang, also in der Grund-Relativlage zwischen Träger 12 und Auslenkungsmasse 34, in welcher die Rückstellelemente 42 nicht gespannt sind, durch die spielbehaftete Aufnahme des radial inneren Endbereichs 50 der Rückstellelemente 42 zwischen den Umfangsabstützbereichen 58, 60 kurzzeitig ein Zustand ohne Kraftübertragung zwischen dem Träger 12 und der Auslenkungsmasse 34 entstehen. In diesem Zustand belasten die Rückstellelemente 42 die zugeordneten Abstützelemente 16 in Umfangsrichtung nicht, so dass eine von derartigen Belastungen und dadurch hervorgerufenen Reibeffekten im Wesentlichen unbeeinträchtigte Radialverschiebung der Abstützelemente 16 auftreten kann. Diese von Reibeffekten möglichst unbeeinträchtigte Verschiebbarkeit der Abstützelemente 16 kann grundsätzlich dadurch auch noch unterstützt werden, dass die Drehschwingungsdämpfungsanordnung 10 in einem mit Fluid, wie z. B. Öl, gefüllten oder füllbaren Gehäuse aufgenommen wird. Dies hat zur Folge, dass die Abstützelemente 16 eine Schmierwirkung bezüglich des Trägers 12 und auch der zugeordneten Rückstellelemente 42 erfahren und somit unter Fliehkraftbelastung leichter verschoben werden können.

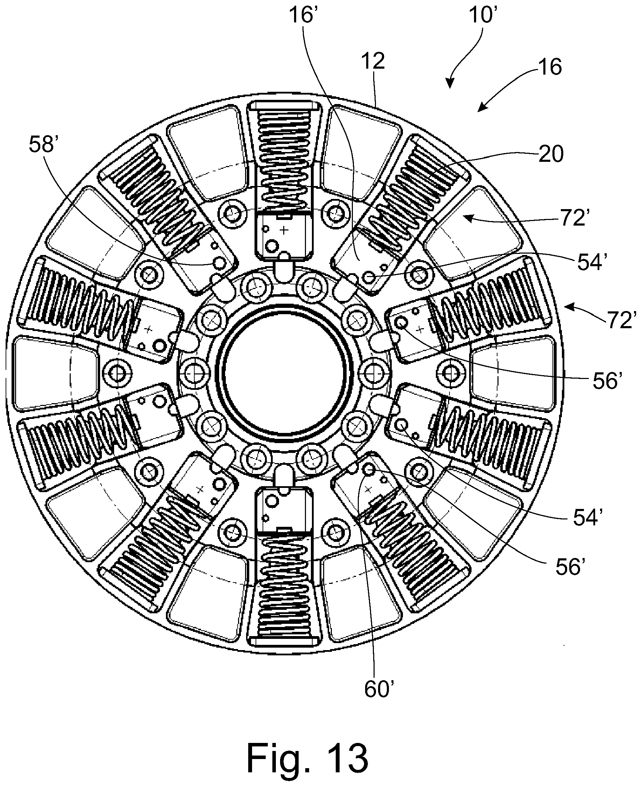

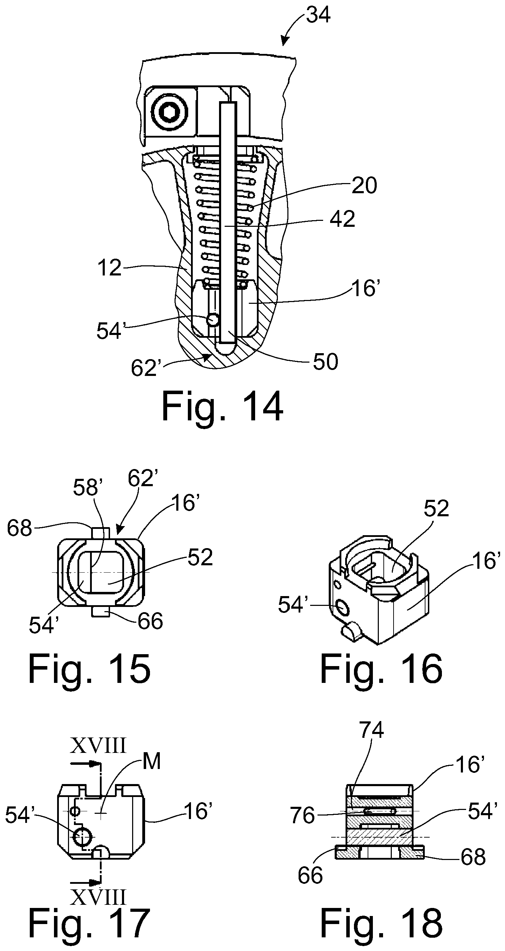

Eine insbesondere hinsichtlich des Aufbaus der Abstützelemente 16 abgewandelte Ausgestaltungsform ist in den Fig. 13 bis 19 dargestellt und wird mit Bezug auf diese Figuren erläutert. Der grundsätzliche Aufbau entspricht dem vorangehend Beschriebenen, so dass auf die diesbezüglichen Ausführungen verwiesen werden kann. Man erkennt insbesondere in den Fig. 14 bis 18, dass bei den hier gezeigten Abstützelementen 16' nur ein Stift 54' oder 56' vorgesehen ist und dementsprechend auch nur ein Umfangsabstützbereich 58', 60' am Trägerabstützbereich 62' vorgesehen ist. Das Rückstellelement 42 kann sich somit nur in einer Umfangsrichtung im Trägerabstützbereich 62' abstützen. Wie die Fig. 13 dies zeigt, ist der Gesamtaufbau derart, dass bei den in Umfangsrichtung aufeinander folgenden Auslenkungsmassenpendeleinheiten 72' abwechselnd einmal ein Stift 54' vorhanden ist, zum Bereitstellen einer Umfangsabstützung in einer Umfangsrichtung, und bei der dann folgenden Auslenkungsmassenpendeleinheit 72' ein Stift 56' vorgesehen ist, um dort eine Umfangsabstützungsfunktionalität in der anderen Umfangsrichtung realisieren zu können. Dies hat zur Folge, dass bei jeder Halbschwingung jeweils nur die Hälfte der Rückstellelemente aller Auslenkungsmassenpendeleinheiten 72' wirksam ist, was die Gesamtsteifigkeit der Drehschwingungsdämpfungsanordnung 10 halbiert.

Es ist darauf hinzuweisen, dass selbstverständlich die Umfangsabfolge derart verschiedener Auslenkungsmassenpendeleinheiten 72' nicht so wie in Fig. 13 dargestellt alternierend sein muss. Auch könnten jeweils mehrere Auslenkungsmassenpendeleinheiten 72' mit grundsätzlich gleichem Aufbau, also Abstützfunktionalität in der gleichen Umfangsrichtung, aufeinander folgend angeordnet sein. Aus Symmetriegründen und zum Vermeiden von Unwuchten ist jedoch die in Fig. 13 dargestellte alternierende Anordnung besonders vorteilhaft.

Um auch bei dieser Ausgestaltungform ein fliehkraftbedingtes Verkippen der Abstützelemente 16' zu vermeiden, liegt auch hier der Massenschwerpunkt M vorteihafterweise zentrisch in der Öffnung 52. Um dies zu erreichen, können zur Kompensation der zusätzlichen Masse eines jeweiligen Stifts 54' bzw. 56' im Abstützelement 16' eine oder mehrere Bohrungen oder Öffnungen 74 und ggf. darin eingesetzte Masseelemente 76 vorgesehen sein.

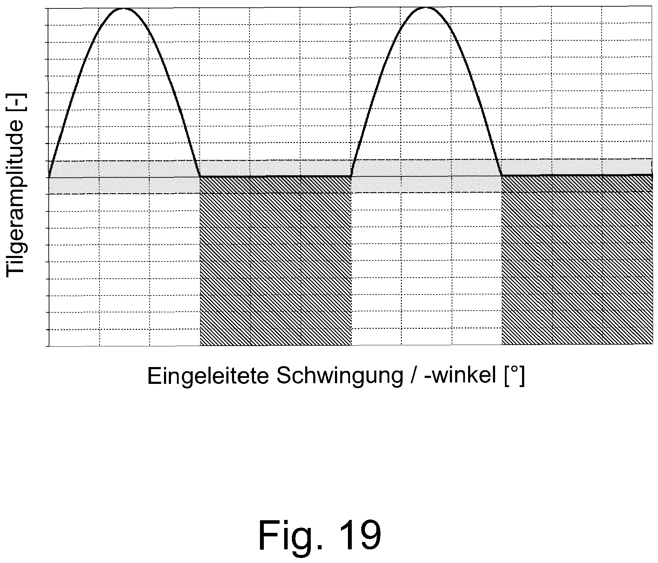

In Fig. 19 ist die Funktionsweise einer derart aufgebauten Auslenkungsmassenpendeleinheit 72' veranschaulicht. Man erkennt, dass diese nur jeweils während Halbschwingungen zum Erzeugen einer Rückstellkraft wirksam ist. Durch Zusammenwirkung mehrerer dann jeweils verschieden gestalteter Auslenkungsmassenpendeleinheiten 72' kann über den gesamten Schwingungsverlauf jeweils eine Rückstellkraftfunktionalität erreicht werden. Weiter erkennt man in Fig. 19 auch hier einen grau hinterlegten Bereich nahe dem Nulldurchgang. Grundsätzlich könnte auch hier vorgesehen sein, dass der jeweils vorhandene Stift bzw. Umfangsabstützbereich im Nulldurchgang einen geringfügigen Umfangsabstand zum zugeordneten Rückstellelement 42 aufweist. Da jedoch immer dann, wenn bezüglich einer Auslenkungsmassenpendeleinheit 72' ein Rückstellelement 42 sich in einer nicht wirksamen Schwingungsphase befindet, das Rückstellelement 42 mit seinem radial inneren Endbereich 50 vom einzigen vorhandenen Umfangsabstützbereich abhebt, könnte auf ein derartiges Spiel auch verzichtet werden.

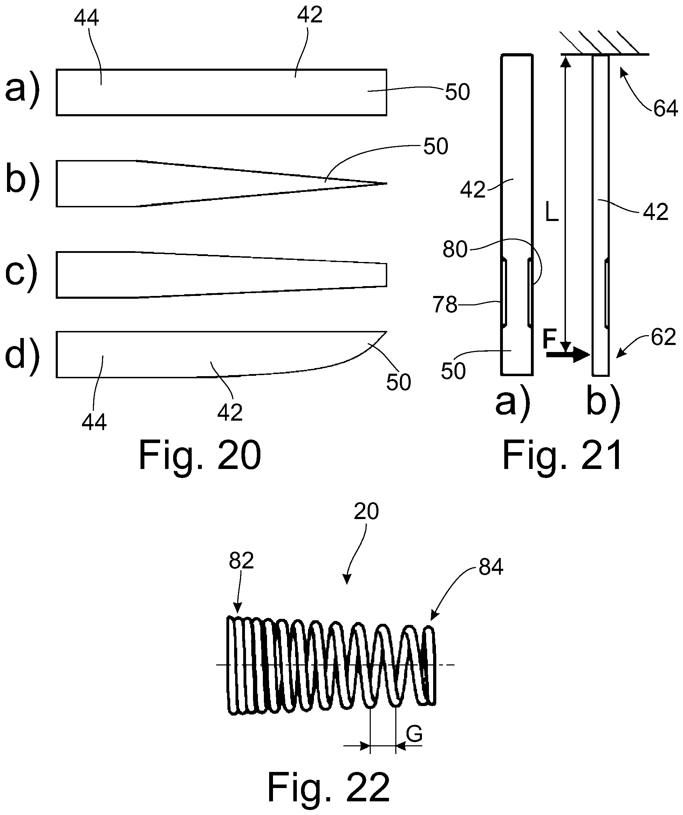

Die Fig. 20 und 21 zeigen verschiedene Ausgestaltungsvarianten des Rückstellelements 42. Die Fig. 20a) bis 20d) zeigen dabei verschiedene geometrische Beschaffenheiten, welche ein blattfederartig bzw. allgemein als Biegebalken ausgebildetes Rückstellelement 42 aufweisen kann. Dabei liegt in diesen Darstellungen links jeweils der radial äußere Endbereich 44, während rechts der radial innere Endbereich 50 liegt. Man erkennt, dass beispielsweise in Fig. 20a) eine im Wesentlichen quaderförmige Ausgestaltung des Rückstellelements 42 mit über dessen Radiallänge konstanter Breite vorgesehen ist. In Fig. 20b) ist an einer Dreieck-Biegefeder nach radial innen hin eine pfeil- bzw. spitzenartige Verjüngung vorgesehen, welche in der eine Trapez-Biegefeder darstellenden Fig. 20c) stumpf endet. In Fig. 20d) ist eine einseitig abgekrümmte Verjüngung des Rückstellelements 42 in Richtung zum radial inneren Endbereich 50 vorgesehen.

Die Fig. 21 zeigt in ihren Darstellungen a) und b) ein blattfederartiges Rückstellelement 42, das grundsätzlich den in Fig. 20a) erkennbaren Aufbau aufweist. Nahe dem radial inneren Endbereich 50 sind jedoch im Bereich zweier eine Breitseite begrenzenden Kanten Anphasungen 78, 80 vorgesehen. Diese können insbesondere bei der in Fig. 14 gezeigten Abwandlung ein Inkontakttreten des Rückstellelements 42 mit dem radial inneren Endbereich der Vorspannfeder 20 bzw. der dort positionierten Windungen derselben vermeiden.

Im Übrigen sei darauf hingewiesen, dass in Fig. 21b) die freie Länge L eines Rückstellelements 42 zwischen seinem radial außen liegenden Auslenkungsmassenabstützbereich 64 und dem radial weiter innen liegenden Trägerabstützbereich 62 erkennbar ist, wo durch Abstützung am jeweils zugeordneten Abstützelement 16 eine Reaktionskraft F eingeleitet wird. Diese freie Länge L definiert im Wesentlichen die Biegesteifigkeit und mithin die Federkonstante eines jeweiligen Rückstellelements 42 und wird bei der nachfolgend detailliert erläuterten Auslegung einer jeweiligen Auslenkungsmassenpendeleinheit 72 bzw. der Drehschwingungsdämpfungsanordnung 10 eine substantielle Rolle spielen.

In Fig. 22 ist in Seitenansicht eine als Schraubendruckfeder ausgebildete Vorspannfeder 20 erkennbar, wie sie bei der vorangehend beschriebenen Drehschwingungsdämpfungsanordnung 10 zum Einsatz kommen kann. Man erkennt in Fig. 22, dass die Vorspannfeder 20 ausgehend von ihrem radial äußeren, am Träger 12 bzw. dem Randbereich 22 desselben abgestützten bzw. abzustützenden Endbereich 82 zu ihrem radial inneren, am Abstützelement 16 sich abstützenden Endbereich 84 eine allgemein sich verjüngende, beispielsweise kegelstumpfartig oder konusartig sich verjüngende Form aufweist. Dabei kann auch die Ganghöhe der einzelnen Windungen variieren, wobei im dargestellten Beispiel diese Variation derart ist, dass zwischen dem radial äußeren Endbereich 82 und dem radial inneren Endbereich 84 die Ganghöhe G der Windungen zunimmt. Auch könnte beispielsweise eine Variation in der Dicke des zum Herstellen einer derartigen Vorspannfeder 20 eingesetzten Federdrahtes zwischen dem radial äußeren Endbereich 82 und dem radial inneren Endbereich 84 vorgesehen sein. Durch diese Ausgestaltung der Vorspannfeder 20 ist dafür gesorgt, dass diese eine von einer bei Schraubendruckfedern allgemein vorhandenen linearen Kraft-Weg-Kennlinie abweichende Kennlinie mit, wie im Folgenden detailliert dargelegt, progressiver Steifigkeit, also mit zunehmender Kompression zunehmender Federkonstante, aufweist.

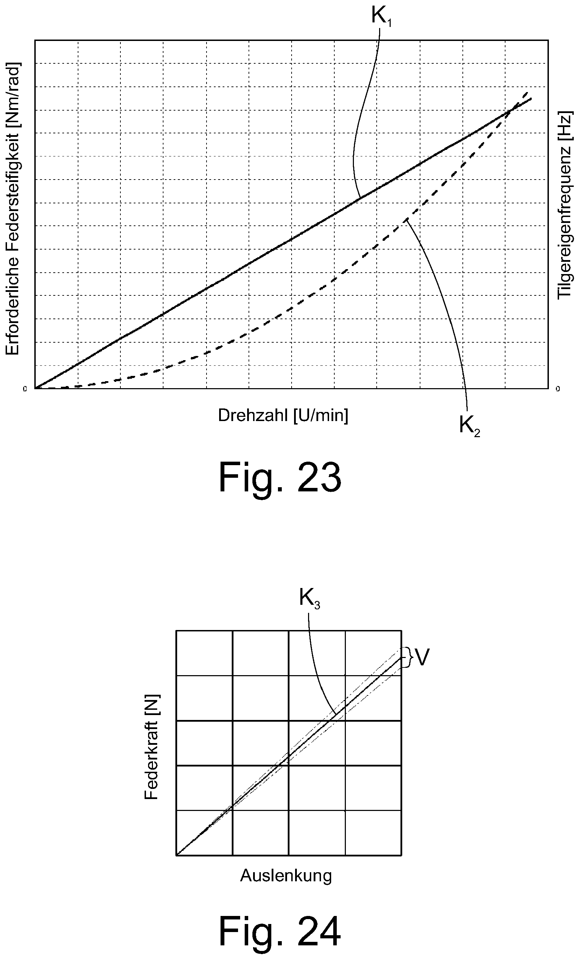

Die vorangehend hinsichtlich ihres konstruktiven Aufbaus detailliert beschriebene Drehschwingungsdämpfungsanordnung 10 soll grundsätzlich als drehzahladaptiver Tilger wirksam sein. Dies bedeutet, dass die Eigenfrequenz dieses Schwingungssystems sich zusammen mit der Frequenz einer anregenden Ordnung verschieben soll, um eine Abstimmung der Eigenfrequenz auf die drehzahlabhängig sich verändernde Frequenz einer Anregungsordnung beizubehalten. Dies ist in Fig. 23 durch die mit durchgezogener Linie K₁ veranschaulichte über der Drehzahl sich linear verändernde Eigenfrequenz, in dieser Figur als Tilgereigenfrequenz bezeichnet, veranschaulicht. Die Eigenfrequenz eines derartigen Schwingungssystems ist allgemein definiert durch die Wurzel aus dem Quotienten von Federsteifigkeit zu Masse. Dies bedeutet, dass zum Erhalt einer sich über der Drehzahl linear verändernden Eigenfrequenz (Kurve K₁) ein parabelartiger bzw. quadratischer Anstieg der Federsteifigkeit bzw. der Federkonstante über der Drehzahl erforderlich ist, wie durch die Kurve K₂ in Fig. 23 veranschaulicht.

Die Zielsetzung bei der Auslegung eines derartigen Schwingungssystems besteht darin, drehzahlabhängig die in Fig. 23 durch die Kurve K₂ veranschaulichte Variation der Steifigkeit und die daraus resultierende lineare Variation der Eigenfrequenz zu erreichen.

Grundlage bei der Auslegung der Drehschwingungsdämpfungsanordnung 10 bzw. der einzelnen Auslenkungsmassenpendeleinheiten 72 ist dabei, dass die eine Rückstellkraft in die Grund-Relativlage der Auslenkungsmasse 34 generierenden Rückstellelemente 42 eine im Wesentlichen lineare Kraft-Weg-Kennlinie aufweisen, wie dies in Fig. 24 mit der Kurve bzw. Gerade K₃ veranschaulicht ist. Hier können gewisse Abweichungen innerhalb eines Variationsbereichs V auftreten. Insbesondere für den Bereich kleiner Auslenkungen weisen beispielsweise blattfederartig bzw. allgemein als Biegebalken ausgebildete Rückstellelemente 42 für eine gegebene freie Länge L zwischen den beiden Abstützbereichen 64, 62 einen im Wesentlichen linearen Kennlinienverlauf K₃ auf.

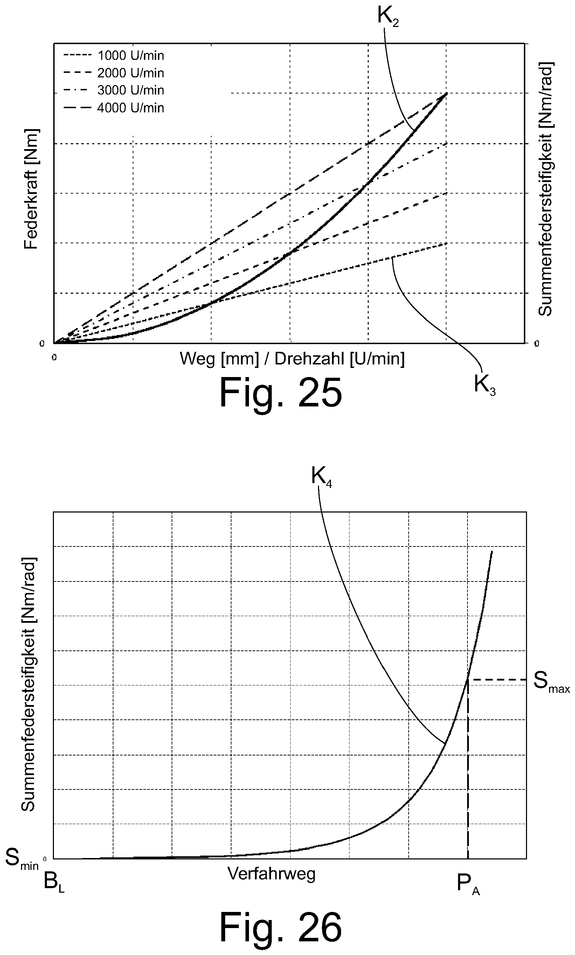

In Fig. 25 ist erneut die anzustrebende parabelartige Variation der Steifigkeit bzw. Federkonstante der einzelnen Rückstellelemente 42 bzw. auch der Summensteifigkeit aller Rückstellelemente 42 anhand der Kurve K₂ aufgetragen über der Drehzahl dargestellt. Es ist hier darauf hinzuweisen, dass aufgrund des Umstandes, dass bei den betrachteten Schwingungssystemen grundsätzlich Drehbewegungen vorliegen und eine Winkelauslenkung aus der Grund-Relativlage zu erzeugen ist, als Einheit für die Steifigkeit bzw. Federkonstante Nm/rad gewählt ist.

Um den parabelartigen bzw. quadratischen Anstieg der Kurve K₂ zu erreichen, ist es somit erforderlich, für verschiedene Drehzahlen entsprechend verschiedene Kraft-Weg-Kennlinien der Rückstellelemente 42, wie sie in Fig. 24 gezeigt sind, bereitzustellen. Dies veranschaulicht die Fig. 25 durch die für verschiedene Drehzahlen von 1000 U/min bis 4000 U/min jeweils eingezeichneten zu erreichenden Kraft-Weg-Kennlinien K₃ der bzw. aller Rückstellelemente 42.

In Fig. 26 ist die Veränderung der Federsteifigkeit bzw. der Federkonstante der Rückstellelemente 42 in Abhängigkeit von der Radialpositionierung der Abstützelemente 16 veranschaulicht. Je weiter die Abstützelemente ausgehend von ihrer Basislage B_{L}, wie sie beispielsweise in Fig. 7 veranschaulicht ist, nach radial außen verlagert werden, desto kürzer ist die freie Länge L der Rückstellelemente 42, und desto steifer werden die einzelnen Rückstellelemente 42 bzw. auch die Rückstellelemente 42 in ihrer Gesamtheit. Dies bedeutet, dass die in Fig. 26 dargestellte Kurve K₄ qualitativ sowohl den abhängig von der Radialpositionierung, also dem Verfahrweg, der Abstützelemente 16 sich ergebenden Verlauf der Steifigkeit bzw. Federkonstante aller Rückstellelemente 42 in ihrer Gesamtheit repräsentiert, als auch den entsprechenden Verlauf für ein einzelnes Rückstellelement 42. Man erkennt dabei in Fig. 26 weiter, dass ausgehend von einer in der Basislage B_{L} vorhandenen minimalen Steifigkeit Sₘᵢₙ ein progressiver Anstieg, also ein Anstieg mit zunehmendem Gradienten, über dem Verfahrweg vorhanden ist, bis bei Erreichen einer radial außen liegenden Anschlagpositionierung P_{A} eine maximal genutzte Steifigkeit S_{MAX} vorliegt. Diese Anschlagspositionierung kann beispielsweise dadurch erreicht bzw. vorgegeben werden, dass die Führungsvorsprünge 66, 68 an den Abstützelementen 16 an den radial äußeren Endbereichen der zugeordneten Aussparungen 70, 71 im Träger 12 bzw. in der Trägerscheibe 28 in Anlage kommen und eine weitere Radialverlagerung der Abstützelemente nicht zulassen.

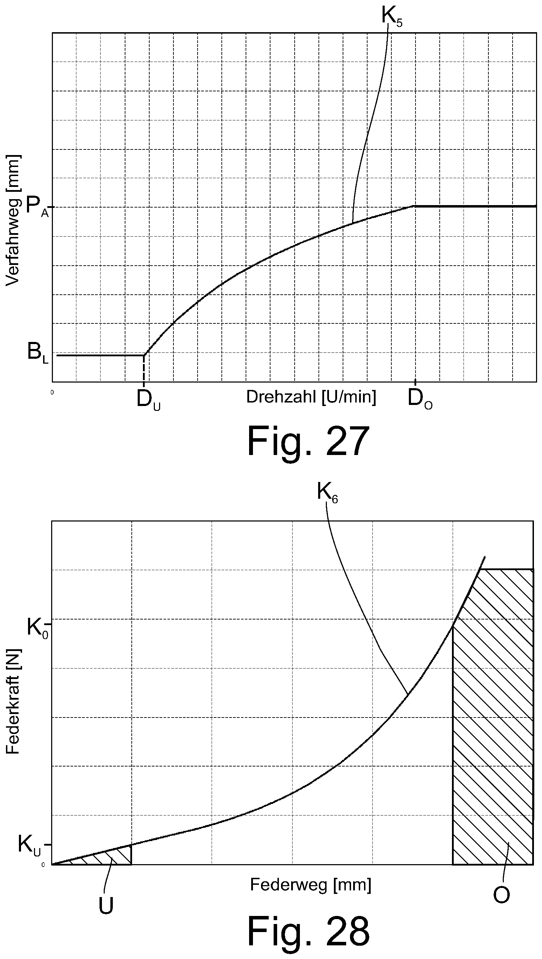

Ausgehend von dieser abhängig vom Verfahrweg, also der Radialpositionierung, sich einstellenden progressiven Variation der Federkonstante bzw. Steifigkeit der einzelnen bzw. aller Rückstellelemente 42 ist es dann erforderlich, einen abhängig von der Drehzahl sich einstellenden, degressiv zunehmenden Verfahrweg der einzelnen Abstützelemente 16 zu erreichen, wie anhand der Kurve K₅ in Fig. 27 veranschaulicht, um letztendlich in Überlagerung mit der vom Verfahrweg abhängig sich einstellenden Steifigkeit gemäß der Kurve K₄ die gewünschte parabelartige Variation der Steifigkeit über der Drehzahl zu erreichen, wie sie beispielsweise in Fig. 25 anhand der Kurve K₂ veranschaulicht ist. Dabei erkennt man in Fig. 27, dass ausgehend von einer Drehzahl 0 die Abstützelemente 16 zunächst in ihrer Basislage B_{L} verharren, bis eine untere Grenzdrehzahl D_{U} erreicht ist. Dies wird durch den vorgespannten Einbau der Vorspannfedern 20 erreicht und stellt sicher, dass bei vergleichsweise geringeren Drehzahlen keine ungewünschten bzw. undefinierten Verstellungen stattfinden können. Erst bei Überschreiten der unteren Grenzdrehzahl D_{U} soll dann eine Radialverlagerung der Abstützelemente 16 nach radial außen mit dem durch die Kurve K₅ repräsentierten degressiven Anstieg erfolgen, was letztendlich bedeutet, dass bei kleineren Drehzahlen ein vorbestimmter Drehzahlanstieg zu einer größeren Radialverlagerung führt, als bei größeren Drehzahlen. Bei Erreichen der oberen Grenzdrehzahl D_{O} erreichen die Abstützelemente 16 ihre Anschlagsposition P_{A}, so dass eine weitere Radialverlagerung nicht auftreten wird.

Um diesen in Fig. 27 veranschaulichten degressiven Verlauf K₅ der drehzahlabhängig sich einstellenden Radialpositionierung zu erreichen, sind die Vorspannfedern 20, welche die Abstützelemente 16 nach radial innen in Richtung zu ihrer Basislage B_{L} belasten, grundsätzlich mit dem in Fig. 28 anhand der Kurve K₆ veranschaulichten progressiven Verlauf ihrer Kraft-Weg-Kennlinie ausgebildet. Auch hier wird ein im Wesentlichen parabelartiger Verlauf gewählt. Aufgrund der Begrenzung der Radialverlagerung der Abstützelemente 16 radial außen bei Erreichen der Anschlagsposition P_{A} wird auch ein schraffiert eingezeichneter oberer Bereich O der Kennlinie nicht genutzt. Letztendlich wird zwischen der Basislage B_{L} und der Anschlagposition P_{A} der Bereich zwischen einer unteren Grenzkraft K_{U}, welche der Vorspannkraft in der Basislage B_{L} entspricht, und einer oberen Grenzkraft K_{O} genutzt.

Durch einen derartigen progressiven Anstieg der Federkraft über dem Federweg, wird mit zunehmender Verlagerung der Abstützelemente 16 nach radial außen einer noch weitergehenden Verlagerung eine progressiv zunehmende Gegenkraft durch die Vorspannfedern 20 entgegengesetzt, was grundsätzlich zu dem in Fig. 27 erkennbaren degressiven Verlauf K₅ der Radialpositionierung mit zunehmender Drehzahl, also mit zunehmender Verlagerung der Abstützelemente 16 nach radial außen und dabei zunehmender Kompression der Vorspannfedern 20, erreicht.

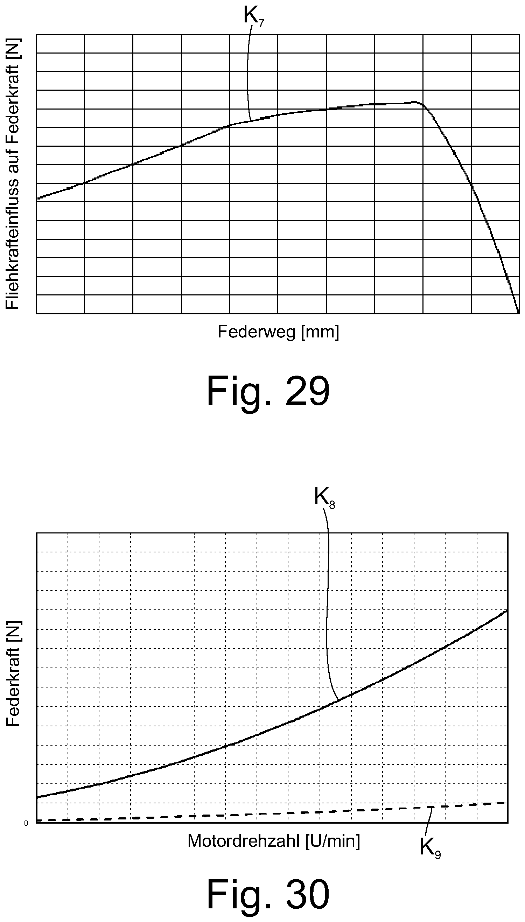

Aufgrund des Umstandes, dass nicht nur die Abstützelemente 16 der Fliehkraftwirkung unterliegen, sondern auch andere deren Radialverlagerung beeinflussende Faktoren, müssen bei der Auslegung der Vorspannfedern 20 verschiedene weitere Aspekte berücksichtigt werden. So unterliegen die mit ihrer Kompressionsrichtung radial orientierten Vorspannfedern 20 selbst einem Fliehkrafteinfluss. Dieser Fliehkrafteinfluss mindert die durch die Vorspannfedern 20 bereitgestellte nach radial innen gerichtete Federkraft in dem in Fig. 29 dargestellten Sinne. Hier ist mit der Kurve K₇ der Fliehkrafteinfluss auf die durch die Federn 20 bereitgestellte Federkraft aufgetragen über dem Federweg, also über der Kompression, wobei ein zunehmender Federweg eine zunehmende Verlagerung der Abstützelemente 16 nach radial außen und somit selbstverständlich auch eine zunehmende Drehzahl repräsentiert. Man erkennt, dass mit zunehmender Kompression und somit auch zunehmender Drehzahl der Fliehkrafteinfluss ansteigt, was letztendlich dadurch bedingt ist, dass die Fliehkraft mit der Drehzahl quadratisch ansteigt, wobei mit zunehmender Kompression diejenigen Bereiche der Vorspannfedern 20, welche noch einer Fliehkrafteinwirkung unterliegen, abnehmen. Durch die Kompression der Vorspannfedern 20 werden beginnend von deren radial äußeren Endbereichen 82 mehr und mehr Windungen sich aufeinander legen, so dass die Anzahl und damit die der Fliehkraft unterliegende Masse der noch nicht auf Block gelegten Windungen abnimmt, mithin auch trotz mit der Drehzahl quadratisch ansteigender Fliehkraft deren Einwirkung auf die Federkraft der Vorspannfedern 20 sich weniger stark bemerkbar machen kann und letztendlich wieder abnimmt.

Bei Auslegung der Vorspannfedern 20 muss diese Fliehkrafteinwirkung zum Erhalt einer gewünschten resultierenden Kraft-Weg-Kennlinie grundsätzlich also mit berücksichtigt werden.

Einen weiteren Einfluss auf die durch die Vorspannfedern 20 bereitzustellende, nach radial innen wirkende Vorspannkraft hat selbstverständlich der in Fig. 30 anhand der Kurve K₈ zum Ausdruck gebrachte Umstand, dass die auf die als Fliehgewichte wirksamen Abstützelemente 16 einwirkende Fliehkraft mit der Drehzahl quadratisch zunimmt. Nicht nur die Abstützelemente 16 unterliegen jedoch der Fliehkraft, sondern auch das in dem vorangehend angesprochenen Gehäuse vorhandene Fluid. Aufgrund des Umstandes, dass die Fliehkraft mit zunehmendem Radialabstand zur Drehachse ebenfalls ansteigt, entsteht hier von radial innen nach radial außen ein sich fliehkraftbedingt im Fluid aufbauender Druckgradient. Sind die Abstützelemente 16 beispielsweise in jeder Positionierung vollständig von fliehkraftbedingt sich radial außen ansammelndem Fluid umgeben, so wirkt auf die nach radial außen orientierten Oberflächenbereiche ein größerer Fluiddruck, als auf die nach radial innen orientierten und damit auch weiter radial innen liegenden Oberflächenbereiche. Dieser Druckunterschied führt letztendlich zu einer die Vorspannfedern 20 unterstützenden, grundsätzlich also nach radial innen gerichteten auf die Abstützelemente 16 wirkenden, mit der Drehzahl zunehmenden Kraft, wie durch die Kurve K₉ in Fig. 30 veranschaulicht. Es sei hier darauf hingewiesen, dass insbesondere mit Bezug auf die durch eine Druckdifferenz generierte Kraft in Fig. 30 lediglich der qualitative Verlauf, also der Kraftbetrag dargestellt wird. Da diese Kraft nach radial innen gerichtet ist, wirkt sie der durch die Kurve K₈ veranschaulichten Fliehkrafteinwirkung auf die Abstützelemente 16 grundsätzlich entgegen, hat also ein negatives Vorzeichen.

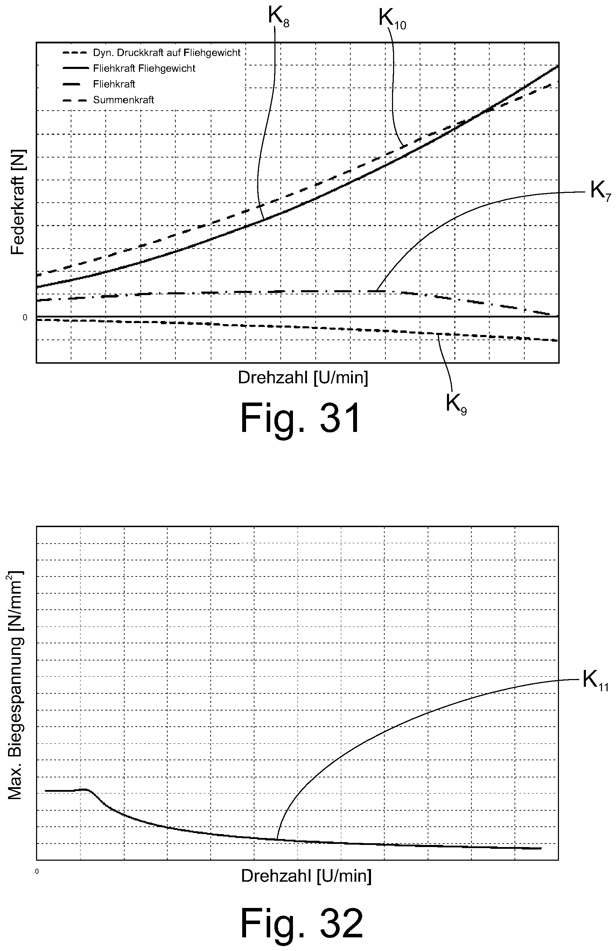

Bei Zusammenschau der vorangehend mit Bezug auf die Fig. 29 und 30 erläuterten Einflussfaktoren ergibt sich für eine Vorspannfeder 20 mit einem grundsätzlich progressiven Anstieg ihrer Federkennlinie, wie anhand der Kurve K₆ in Fig. 28 veranschaulicht, eine resultierende über der Drehzahl aufgetragene Federkraft, wie diese durch die Kurve K₁₀ in Fig. 31 veranschaulicht ist. In Fig. 31 sind auch die verschiedenen der Kennlinie K₆ zu überlagernden bzw. dieser entgegenwirkenden oder sie unterstützenden Einflussfaktoren, wie sie vorangehend anhand der Kurven K₇, K₈ und K₉ erläutert wurden, dargestellt. Die Verstellfedern 20 sind also mit ihren jeweiligen Kennlinien K₆ so auszulegen, dass unter Berücksichtigung der vorangehend beschriebenen Einflussgrößen der resultierende Verlauf der Federkraft über der Motordrehzahl, wie durch die Kurve K₁₀ dargestellt, letztendlich den in der Fig. 27 erkennbaren degressiv ansteigenden Verlauf K₅ der Radialpositionierung der Abstützelemente 16 zur Folge hat. Dieser degressiv ansteigende Verlauf wiederum führt in Verbindung mit der abhängig von dieser Radialpositionierung bzw. dem Verfahrweg sich gemäß der Kurve K₄ in Fig. 26 verändernden Steifigkeit bzw. Federkonstante zu einem progressiv, insbesondere parabelartig ansteigenden, anzustrebenden Verlauf der Steifigkeit des Schwingungssystems in Abhängigkeit von der Drehzahl, wie beispielsweise anhand der Kurve K₂ in Fig. 24 und Fig. 25 veranschaulicht. Dieser progressive, parabelartige Verlauf K₂ wiederum hat einen linearen Anstieg der Eigenfrequenz über der Drehzahl zur Folge und gewährleistet somit, dass die Abstimmung auf eine Anregungsordnung beibehalten werden kann. Je nach Auslegung des Systems kann dabei der nutzbare bzw. zur Variation zur Verfügung stehende Drehzahlbereich zwischen den Grenzdrehzahlen D_{U} und D_{O} ausgewählt bzw. begrenzt werden. Die Auslegung der verschiedenen Einflussfaktoren, wie z. B. die Gestaltung der Vorspannfedern 20 zum Erhalt der Kennlinien K₆ derselben bzw. auch die Formgebung der Abstützelemente 16 zum Einstellen einer gewünschten Druckdifferenz zwischen den radial äußeren und radial inneren Oberflächen bzw. auch die Auslegung der Rückstellelemente 42 mit ihren im Wesentlichen linearen Kraft-Weg-Kennlinien können beispielsweise im Versuch oder in Deckenmodellen aufeinander abgestimmt werden, um letztendlich durch Überlagerung der verschiedenen Einflussfaktoren bzw. Kennlinien zum Steifigkeitsverlauf K₂ und somit zum Eigenfrequenzverlauf K₁ zu gelangen.

In Fig. 32 veranschaulicht eine Kurve K₁₁ aufgetragen über der Drehzahl die im Bereich der Rückstellelemente 42 auftretende maximale Biegespannung, d. h. die bei Durchführung einer Schwingungsbewegung auftretende maximale Auslenkung. Dabei ist erkennbar, dass nur bei niedrigeren Drehzahlen eine derart große Auslenkung erzeugt wird, dass die durch Zusammenwirken der Bolzen 40 mit den Aussparungen 36 bereitgestellte Drehwinkelbegrenzung aktiv ist. Mit zunehmender Drehzahl nimmt jedoch die Schwingungsamplitude der Auslenkungsmasse 34 und mithin die Verformung und die in den Rückstellelementen 42 generierte Biegespannung ab, so dass bei höheren Drehzahlen gewährleistet ist, dass eine möglicherweise durch Wirksamwerden des Drehbewegungsanschlags eingeführte Verstimmung des Schwingungssystems nicht auftreten kann.

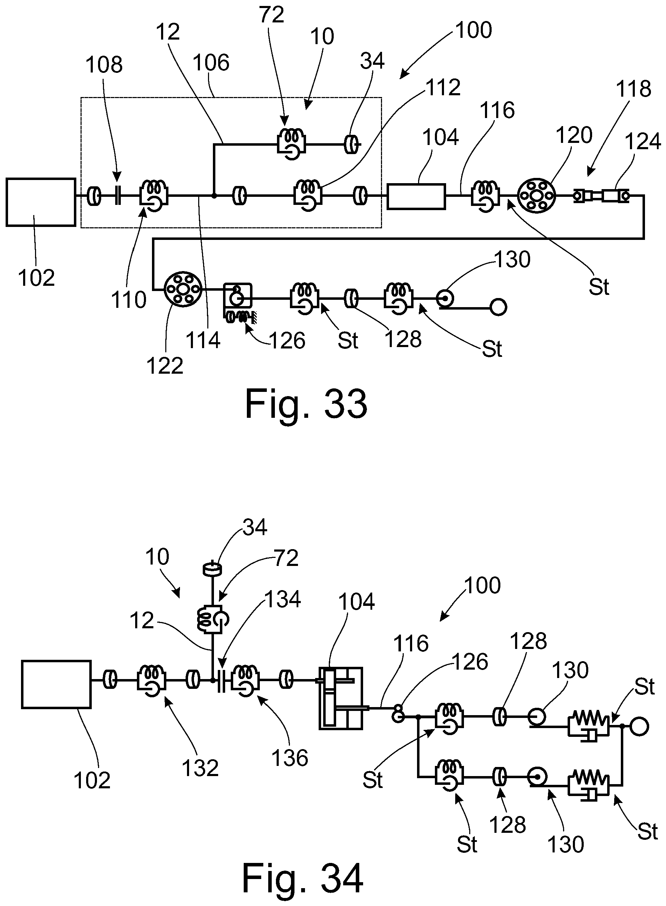

Nachfolgend werden mit Bezug auf die Fig. 33 bis 37 verschiedene Einsatzmöglichkeiten der vorangehend beschriebenen Drehschwingungsdämpfungsanordnung 10 erläutert.

In Fig. 33 umfasst ein Antriebsstrang 100 ein beispielsweise als Brennkraftmaschine ausgebildetes Antriebsaggregat 102. Im Drehmomentenfluss zwischen dem Antriebsaggregat 102 und einem Getriebe 104, beispielsweise Automatikgetriebe, ist in einem rotierenden Nassraum 106 eines allgemein mit 108 bezeichneten Anfahrelements eine Drehschwingungsdämpfungsanordnung 10 mit dem vorangehend beschriebenen Aufbau angeordnet. Diese umfasst die durch die Auslenkungsmassenpendelanordnungen 72 mit der Auslenkungsmasse 34 bereitgestellte Steifigkeit und ist mit dem Träger 12 an eine rotierende Komponente des Antriebsstrangs 100 angekoppelt. Dabei können in dem rotierenden Nassraum 106 zwei seriell wirksame Drehschwingungsdämpfer 110, 112 vorgesehen sein, jeweils mit einer Primärseite und einer Sekundärseite sowie dazwischen wirkenden Dämpferfedern, über welche das zwischen dem Antriebsaggregat 102 und dem Getriebe 104 übertragene Drehmoment geleitet wird. Im dargestellten Ausgestaltungsbeispiel ist eine Sekundärseite des Drehschwingungsdämpfers 110 mit einer Primärseite des Drehschwingungsdämpfers 112 zum Bereitstellen einer Zwischenmasse 114 gekoppelt, an welche der Träger 12 angebunden ist. Im Drehmomentenfluss auf das Getriebe 104 bzw. eine Getriebeausgangswelle 116 folgt eine allgemein mit 118 bezeichnete Kardanwellenanordnung mit jeweiligen Gelenkscheiben 120, 122 und einer dazwischen liegenden Kardanwelle 124. Abtriebsseitig ist die Kardanwelle 124 an ein Achsgetriebe bzw. Differential 126 angekoppelt. Von diesem wird das Drehmoment auf Felgen 128 bzw. Reifen 130 übertragen. In Zuordnung zu verschiedenen Übertragungswellen, wie z. B. der Getriebeausgangswelle 116 einer Übertragungswelle zwischen dem Differential und den Felgen 128 bzw. auch den Felgen 128 bzw. den Reifen 130 sind aufgrund deren Eigenelastizität jeweilige Steifigkeiten St veranschaulicht.

Während in Fig. 33 ein in Fahrtrichtung längs eingebauter Antriebsstrang 100, also mit längsorientiertem Antriebsaggregat 102 und längsorientiertem Getriebe 104, veranschaulicht ist, zeigt die Fig. 34 einen Antriebsstrang 100 mit quer eingebautem Antriebsaggregat 102 bzw. Getriebe 104. Zwischen diesen liegt beispielsweise ein Drehschwingungsdämpfer 132 in Form eines Zweimassenschwungrads, dessen Sekundärseite mit einer Reibungskupplung, beispielsweise Trockenreibkupplung 134, gekoppelt ist. Eine beispielsweise ebenfalls mit Drehschwingungsdämpfer ausgebildete Kupplungsscheibe 136 überträgt das Drehmoment weiter zu dem beispielsweise als Handschaltgetriebe ausgebildeten Getriebe 104.

An die Sekundärseite des Drehschwingungsdämpfers bzw. Zweimassenschwungrads 132 ist der Träger 12 der Drehschwingungsdämpfungsanordnung 10 angekoppelt.

Abtriebsseitig folgen auf die Getriebeausgangswelle 116 und ein Differential 126 und die Antriebsachse mit ihren beiden Felgen 128 und Reifen 130. Auch hier sind mit St jeweilige Steifigkeiten der Antriebswellen bzw. Räder veranschaulicht.

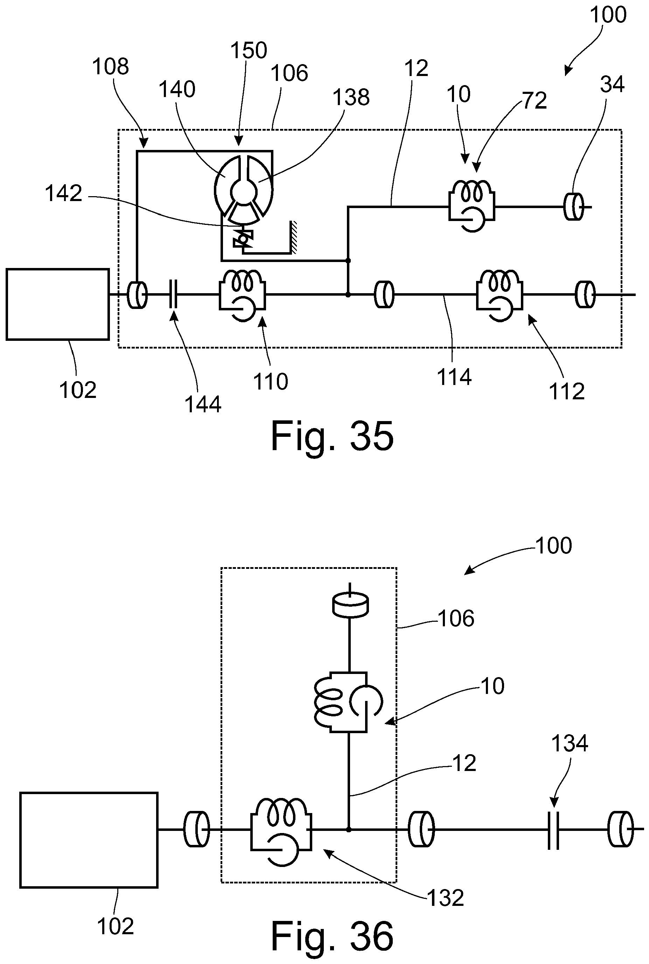

In Fig. 35 ist ein weiteres Beispiel eines Teils eines Antriebsstrangs 100 mit einem auf ein Antriebsaggregat 102 folgenden hydrodynamischen Drehmomentwandler 150 als Anfahrelement 108 veranschaulicht. Im Gehäuse bzw. rotierenden Nassraum 106 desselben bzw. damit rotierend ist ein Pumpenrad 138 vorgesehen. Diesem axial gegenüberliegend ist ein Turbinenrad 140 vorgesehen. Zwischen dem Pumpenrad 138 und dem Turbinenrad 140 liegt ein allgemein mit 142 bezeichnetes Leitrad. Parallel zu dem hydrodynamischen Drehmomentübertragungsweg, welcher die Fluidzirkulation zwischen Pumpenrad, Turbinenrad und Leitrad umfasst, ist ein Drehmomentübertragungsweg über eine Überbrückungskupplung 144 einrichtbar. Auf die Überbrückungskupplung folgen die beiden Drehschwingungsdämpfer 110, 112, zwischen welchen eine Zwischenmasse 114 gebildet ist. An diese ist das Turbinenrad 140 ebenso wie der Träger 12 der Drehschwingungsdämpfungsanordnung 10 angekoppelt. Es sei hier darauf hingewiesen, dass die beispielsweise auch in Fig. 35 erkennbaren Drehschwingungsdämpfer einen bekannten Aufbau mit zwei Deckscheiben und einer dazwischen liegenden Zentralscheibe aufweisen können, wobei entweder die beiden Deckscheiben oder die Zentralscheibe der Primärseite und die jeweils andere Baugruppe dann der Sekundärseite zugeordnet ist. In jedem derartigen Drehschwingungsdämpfer können eine oder mehrere Federsätze parallel oder seriell, ggf. auch gestuft wirksam sein, um eine entsprechend gestufte Dämpfungscharakteristik erlangen zu können.

Über das Antriebsaggregat 102 in den Eingangsbereich des hydrodynamischen Drehmomentwandlers eingeleitete Drehschwingungen bzw. Drehungleichförmigkeiten können bei eingerückter bzw. drehmomentübertragender Überbrückungskupplung 144 zunächst in dem im Drehmomentenfluss stromaufwärts liegenden Drehschwingungsdämpfer 110 gemindert bzw. gedämpft werden. Die dann noch in die Zwischenmasse 114 eingeleiteten Drehschwingungen können unter Wirkung der an diese angekoppelten Drehschwingungsdämpfungsanordnung 10 durch entsprechende Auslegung auf eine anregende Ordnung dann weiter gemindert bzw. getilgt werden. Eine noch weitergehende Filterung bzw. Schwingungsdämpfung kann dann durch den im Drehmomentenfluss stromabwärts folgenden weiteren Drehschwingungsdämpfer 112 erfolgen.

Es ist selbstverständlich, dass hier verschiedene Variationen vorgenommen werden können. So könnte beispielsweise das Turbinenrad 140 direkt an eine Getriebeeingangswelle, also die Sekundärseite des Drehschwingungsdämpfers 112 angekoppelt werden, wodurch die Massenträgheit einer Getriebeeingangswelle erhöht wird. Dies hätte zur Folge, dass im Wirkungsbereich der Hydrodynamik des Drehmomentwandlers bei ausgerückter Überbrückungskupplung 144 keiner der beiden Drehschwingungsdämpfer 110, 112 wirksam wäre.

Bei einer weiteren Variante könnte das Turbinenrad 140 die oder einen Teil der Auslenkungsmasse 34 bereitstellen. Somit kann eine Funktionenverschmelzung und damit eine kompakte Baugröße gewährleistet werden. Eine derartige Ausgestaltung hätte zur Folge, dass immer dann, wenn die Überbrückungskupplung 144 ausgerückt ist und ein Drehmoment über das Turbinenrad 140 zu übertragen ist, auch die Drehschwingungsdämpfungsanordnung 10 zur Drehmomentübertragung genutzt wird, wobei dann die Auslegung derart sein kann, dass in diesem Zustand die Drehwinkelbegrenzungsfunktionalität der Bolzen 40 und Öffnungen 36 wirksam ist, die Rückstellelemente 42 also nicht übermäßig belastet werden. Wird die Überbrückungskupplung 144 eingerückt, ist das Turbinenrad lediglich als Auslenkungsmasse wirksam, wobei es aufgrund der fluidischen Wechselwirkung auch zu einer viskosen Dämpfung beiträgt.

Auch könnte selbstverständlich die Überbrückungskupplung 144 im Drehmomentenfluss zwischen den beiden Drehschwingungsdämpfern 110, 112 oder sogar danach liegen, wobei zu gewährleisten ist, dass das Turbinenrad 140 abtriebsseitig an die Überbrückungskupplung 144 angekoppelt ist. In entsprechender Weise könnte selbstverständlich auch der Träger 12 der Drehschwingungsdämpfungsanordnung 10 mit der Primärseite des Drehschwingungsdämpfers 110 oder der Sekundärseite des Drehschwingungsdämpfers 112 gekoppelt sein.

In Fig. 36 ist eine Ausgestaltungsvariante eines Antriebsstrangs 100 gezeigt, in welcher das Antriebsaggregat 102 sein Drehmoment über ein beispielsweise in einem rotierenden Nassraum 106 integriertes Zweimassenschwungrad 132 überträgt. An dessen Sekundärseite ist die Drehschwingungsdämpfungsanordnung 10 mit ihrem Träger 12 angebunden. Im Drehmomentenfluss folgt dann ein Anfahrelement, beispielsweise eine Reibungskupplung 134.

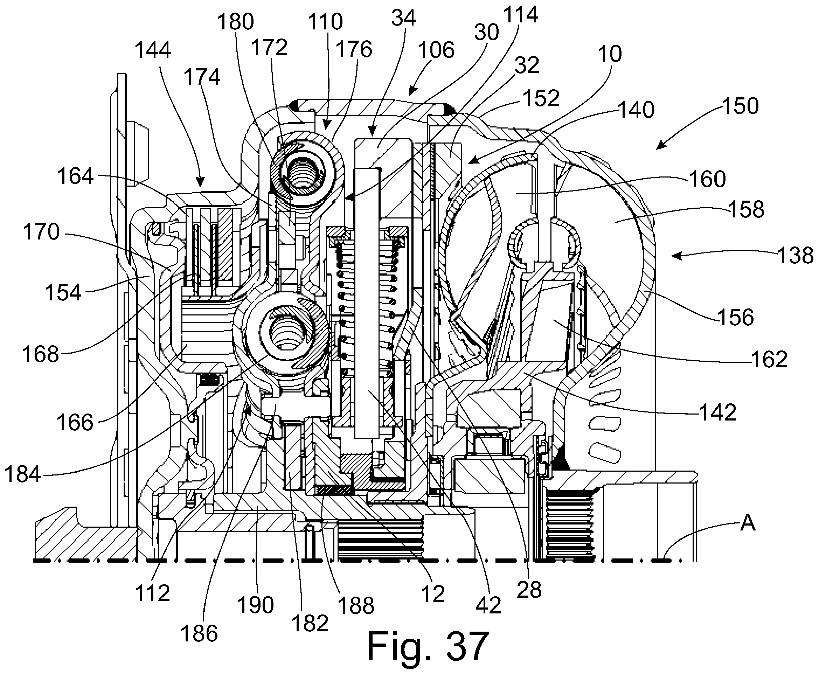

In Fig. 37 ist in konstruktiver Ausführung im Teillängsschnitt ein hydrodynamischer Drehmomentwandler 150 dargestellt. Dessen Gehäuse 152 stellt den rotierenden Nassraum 106 bereit und umfasst eine antriebsseitige Gehäuseschale 154 und eine abtriebsseitige Gehäuseschale 156, welche gleichzeitig auch eine Pumpenradschale bildet und an ihrer Innenseite eine Mehrzahl von in Umfangsrichtung um die Drehachse A aufeinander folgenden Pumpenradschaufeln 158 trägt. Dem so bereitgestellten Pumpenrad 138 liegt das Turbinenrad 140 mit seinen Turbinenradschaufeln 160 axial gegenüber. Zwischen dem Pumpenrad 138 und dem Turbinenrad 140 liegt das Leitrad 142 mit seinen Leitradschaufeln 162.

Die Überbrückungskupplung 144 umfasst mit der antriebsseitigen Gehäuseschale 154 zur Drehung gekoppelte antriebsseitige Reibelemente bzw. Lamellen 164 sowie mit einem Reibelemententräger 166 zur Drehung gekoppelte abtriebsseitige Reibelemente bzw. Lamellen 168. Diese können durch einen Kupplungskolben 170 zur Drehmomentübertragung bzw. zum Einrücken der Überbrückungskupplung 144 gegeneinander gepresst werden. Der im Drehmomentenfluss auf die Überbrückungskupplung 144 folgende und hier radial außen positionierte Drehschwingungsdämpfer 110 umfasst als Primärseite ein mit dem Reibelemententräger 166 gekoppeltes Zentralscheibenelement 172. Axial beidseits davon liegen Deckscheibenelemente 174, 176, welche mit ihrem radial äußeren Bereich im Wesentlichen die Sekundärseite des Drehschwingungsdämpfers 110 bereitstellen. Durch Dämpferfedern 180 des Drehschwingungsdämpfers 110 wird ein Drehmoment zwischen dem Zentralscheibenelement 172, also der Primärseite, und den Deckscheibenelementen 174, 176, also der Sekundärseite, übertragen.

Mit ihrem radial inneren Bereich bilden die Deckscheibenelemente 174, 176 eine Sekundärseite des radial innen positionierten zweiten Drehschwingungsdämpfers 112. Axial zwischen diesen miteinander fest verbundenen Deckscheibenelementen liegt ein weiteres Zentralscheibenelement 182, welches im Wesentlichen eine Sekundärseite des weiteren Drehschwingungsdämpfers 112 bereitstellt und durch Dämpferfedern 184 mit den Deckscheibenelementen 174, 176 zur Drehmomentübertragung gekoppelt ist.

Die beiden Deckscheibenelemente 174, 176 stellen im Wesentlichen auch die Zwischenmassenanordnung 114 bereit, an welche beispielsweise vermittels die beiden Deckscheibenelemente 174, 176 auch miteinander fest verbindenden Bolzen 186 der Träger 12 einer erfindungsgemäß aufgebauten Drehschwingungsdämpfungsanordnung 10 angekoppelt ist. Die Schwungmasse 34 der Drehschwingungsdämpfungsanordnung 10 umfasst die beiden Masseringe 30, 32 sowie die Trägerscheibe 28 und liegt axial im Wesentlichen zwischen den beiden radial gestaffelt angeordneten Drehschwingungsdämpfern 110, 112 und dem Turbinenrad 140. Durch die Formgebung des Masserings 32 mit radial innen angeschrägter Kontur kann dieser das Turbinenrad 140 axial übergreifend positioniert werden, so dass eine axial kompakte Baugröße ermöglicht ist.

Man erkennt, dass der Träger 12 radial innen über ein Lager 188, beispielsweise Gleitlager oder Wälzkörperlager, auf einer an die Zentralscheibe 182 angebundenen Ausgangsnabe 190 der Drehschwingungsdämpferungsanordnung 10 drehbar gelagert ist. Mit dieser Ausgangsnabe 190 ist auch das Turbinenrad 140 beispielsweise durch Verzahnungseingriff zur gemeinsamen Drehung verbunden, so dass das über das Turbinenrad geleitete Drehmoment unter Umgehung der beiden seriell wirksamen Drehschwingungsdämpfer 110, 112 in die Abtriebsnabe 190 eingeleitet wird. Alternativ könnte, wie vorangehend bereits dargelegt, das Turbinenrad 140 an den Träger 12 bzw. allgemein die Zwischenmasse 114 angekoppelt werden oder an die Auslenkungsmasse 34 angekoppelt werden, um deren Massenträgheitsmoment zu erhöhen.

Es ist darauf hinzuweisen, dass vorangehend beschriebene konstruktive Ausgestaltungen der Drehschwingungsdämpfungsanordnung 10 auch unabhängig davon, ob dabei die insbesondere mit Bezug auf die Fig. 23 bis 31 erläuterte Auslegung zum Erhalt einer gewünschten Tilgercharakteristik gewählt wird oder nicht, eigenständige erfinderische Qualität aufweisen und somit ein eigenständiger Teil der hier beschriebenen Erfindung sind.

## Patentansprüche

1. Drehschwingungsdämpfungsanordnung, vorzugsweise für den Antriebsstrang eines Fahrzeugs, umfassend wenigstens eine Auslenkungsmassenpendeleinheit (72; 72') mit
- einem um eine Drehachse (A) drehbaren Träger (12),
- einer bezüglich des Trägers (12) in Umfangsrichtung um die Drehachse (A) auslenkbaren Auslenkungsmasse (34),
- einem in einem Trägerabstützbereich (62; 62') bezüglich des Trägers (12) und in einem Auslenkungsmassenabstützbereich (64) bezüglich der Auslenkungsmasse (34) abgestützten oder abstützbaren, verformbaren Rückstellelement (42), wobei eine Auslenkung der Auslenkungsmasse (34) aus einer Grundrelativlage bezüglich des Trägers (12) in wenigstens einer Richtung eine Verformung des Rückstellelements (42) bewirkt,
- einem am Träger (12) radial bewegbar getragenen und den Trägerabstützbereich (62; 62') bereitstellenden Abstützelement (16; 16'), wobei durch Bewegung des Abstützelements (16; 16') am Träger (12) ein Abstand zwischen dem Trägerabstützbereich (62; 62') und dem Auslenkungsmassenabstützbereich (64) veränderbar ist und das Abstützelement (16; 16') in Richtung zu einer radial inneren Basislage (B_{L}) vorgespannt ist und bei Drehung des Trägers (12) um die Drehachse (A) entgegen der Vorspannung unter Fliehkrafteinwirkung ausgehend von der Basislage (B_{L}) nach radial außen verlagerbar ist, **dadurch gekennzeichnet, dass** wenigstens in einem Drehzahlbereich (D_{U}-D_{O}) ein Radialabstand des Abstützelements (16; 16') zur Basislage (B_{L}) mit zunehmender Fliehkrafteinwirkung degressiv zunimmt, oder/und dass durch fliehkraftbedingte Verlagerung des Abstützelements (16; 16') nach radial außen eine Federsteifigkeit des Rückstellelements (42) wenigstens in einem Drehzahlbereich progressiv zunimmt.

2. Drehschwingungsdämpfungsanordnung nach Anspruch 1, **dadurch gekennzeichnet, dass** ein Zusammenhang zwischen der Drehzahl und der Federsteifigkeit des Rückstellelements (42) einen parabelartigen Verlauf aufweist.

3. Drehschwingungsdämpfungsanordnung nach einem der Ansprüche 1 oder 2, **dadurch gekennzeichnet, dass** das Rückstellelement (42) eine Rückstellfeder, vorzugsweise Blattfeder oder Stabfeder, vorzugsweise mit im Wesentlichen linearer Kraftkennlinie (K₃) umfasst.

4. Drehschwingungsdämpfungsanordnung nach einem der Ansprüche 1 bis 3, **dadurch gekennzeichnet, dass** das Rückstellelement (42) bezüglich der Auslenkungsmasse (34) oder/und bezüglich des Trägers (12) festgelegt ist.

5. Drehschwingungsdämpferanordnung nach einem der Ansprüche 1 bis 4, **dadurch gekennzeichnet, dass** das Abstützelement (16; 16') in der Basislage (B_{L}) mit einer Vorspannkraft beaufschlagt ist.

6. Drehschwingungsdämpfungsanordnung nach einem der Ansprüche 1 bis 5, **dadurch gekennzeichnet, dass** dem Abstützelement (16; 16') eine dieses in Richtung zur Basislage (B_{L}) vorspannende Vorspannanordnung (20), vorzugsweise Vorspannfeder (20), zugeordnet ist.

7. Drehschwingungsdämpfungsanordnung nach Anspruch 6, **dadurch gekennzeichnet, dass** die Vorspannanordnung (20) eine progressive, vorzugsweise parabelartige Vorspannkraftkennlinie (K₆) aufweist.

8. Drehschwingungsdämpfungsanordnung nach einem der Ansprüche 1 bis 7, **dadurch gekennzeichnet, dass** am Träger (12) eine Führung (14) für das Abstützelement (16; 16') vorgesehen ist, wobei das Abstützelement (16; 16') an der Führung (14) vorzugsweise im Wesentlichen in Radialrichtung bewegbar geführt ist, vorzugsweise mit Umfangsbewegungsspiel.

9. Drehschwingungsdämpfungsanordnung nach einem der Ansprüche 1 bis 8, **dadurch gekennzeichnet, dass** das Abstützelement (16; 16') zur Bereitstellung des Trägerabstützbereichs (62) an lediglich einer Umfangsseite des Rückstellelements (42) einen Umfangsabstützbereich (58, 60; 58', 60') aufweist.

10. Drehschwingungsdämpfungsanordnung nach Anspruch 9, **dadurch gekennzeichnet, dass** das Abstützelement (16) an beiden Umfangsseiten des Rückstellelements (42) einen Umfangsabstützbereich (58, 60) aufweist.

11. Drehschwingungsdämpfungsanordnung nach Anspruch 10, **dadurch gekennzeichnet, dass** das Rückstellelement (42) mit Umfangsbewegungsspiel zwischen den Umfangsabstützbereichen (58, 60) angeordnet ist.

12. Drehschwingungsdämpfungsanordnung nach einem der Ansprüche 1 bis 11, **dadurch gekennzeichnet, dass** das Abstützelement (16; 16') eine Durchgriffsöffnung (52) für das Rückstellelement (42) aufweist und entlang des Rückstellelements (42) bewegbar ist, wobei vorzugsweise ein Massenschwerpunkt (M) des Abstützelements (16; 16') im Bereich der Durchgangsöffnung (52) liegt.

13. Drehschwingungsdämpfungsanordnung nach einem der Ansprüche 1 bis 12, **dadurch gekennzeichnet, dass** die wenigstens eine Auslenkungsmassenpendeleinheit (72; 72') in einem mit Fluid gefüllten oder füllbaren Gehäuse (152) angeordnet ist.

14. Drehschwingungsdämpfungsanordnung nach einem der Ansprüche 1 bis 13, **dadurch gekennzeichnet, dass** bei in einer Grund-Relativlage bezüglich des Trägers (12) positionierter Auslenkungsmasse (34) das Rückstellelement (42) sich im Wesentlichen radial erstreckt.

15. Drehschwingungsdämpfungsanordnung nach einem der Ansprüche 1 bis 14, **dadurch gekennzeichnet, dass** eine Mehrzahl von Auslenkungsmassenpendeleinheiten (72; 72') vorzugsweise mit im Wesentlichen gleichmäßigem Umfangsabstand zueinander um die Drehachse (A) vorgesehen ist.

16. Drehschwingungsdämpfungsanordnung nach Anspruch 15, **dadurch gekennzeichnet, dass** die Abstützelemente (16; 16') von wenigstens zwei, vorzugsweise allen Auslenkungsmassenpendeleinheiten (72; 72') an einem gemeinsamen Träger (12) bewegbar getragen sind.

17. Drehschwingungsdämpfungsanordnung nach Anspruch 15 oder 16, **dadurch gekennzeichnet, dass** wenigstens eine Auslenkungsmasse (34) eine gemeinsame Auslenkungsmasse (34) für wenigstens zwei, vorzugsweise alle Auslenkungsmassenpendeleinheiten (72; 72') bereitstellt.

18. Drehschwingungsdämpfungsanordnung nach Anspruch 17, **dadurch gekennzeichnet, dass** die gemeinsame Auslenkungsmasse (34) einen Auslenkungsmassenring (30, 32, 28) umfasst.

19. Antriebsstrang für ein Fahrzeug, umfassend wenigstens eine Drehschwingungsdämpfungsanordnung (10) nach einem der vorangehenden Ansprüche.

20. Antriebsstrang nach Anspruch 19 **dadurch gekennzeichnet, dass** der Antriebsstrang (100) ein Anfahrelement, vorzugsweise hydrodynamischer Drehmomentwandler (150) oder Fluidkupplung oder nasslaufende Reibungskupplung oder Trockenreibungskupplung (132), umfasst und dass wenigstens eine Drehschwingungsdämpfungsanordnung (10) im Bereich des Anfahrelements vorgesehen ist.

21. Antriebsstrang nach Anspruch 20, **dadurch gekennzeichnet, dass** das Anfahrelement (150) ein Turbinenrad (140) umfasst und dass das Turbinenrad (140) wenigstens einen Teil der Auslenkungsmasse (30) einer Drehschwingungsdämpfungsanordnung (10) bereitstellt.

22. Antriebsstrang nach Anspruch 19, 20 oder 21, **dadurch gekennzeichnet, dass** der Antriebsstrang (100) wenigstens einen Drehschwingungsdämpfer (110, 112; 132, 136) mit einer Primärseite und einer gegen die Rückstellwirkung einer Dämpferfederanordnung (180, 184) bezüglich der Primärseite drehbaren Sekundärseite umfasst, wobei wenigstens eine Drehschwingungsdämpfungsanordnung (10) im Bereich wenigstens eines Drehschwingungsdämpfers (110, 112) vorgesehen ist.

23. Antriebsstrang nach Anspruch 22, **dadurch gekennzeichnet, dass** zwei Drehschwingungsdämpfer (110, 112) im Drehmomentenfluss seriell zueinander vorgesehen sind, wobei eine Sekundärseite eines Drehschwingungsdämpfers (110) mit einer Primärseite des anderen Drehschwingungsdämpfers (112) zum Bereitstellen einer Zwischenmasse (114) gekoppelt ist, wobei wenigstens eine Drehschwingungsdämpfungsanordnung (10) im Bereich der Zwischenmasse (114) vorgesehen ist.

## Claims

1. Torsional vibration damping arrangement, preferably for the drive train of a vehicle, comprising at least one deflection mass pendulum unit (72; 72') with
- a carrier (12) which can be rotated about a rotational axis (A),
- a deflection mass (34) which can be deflected in the circumferential direction about the rotational axis (A) with regard to the carrier (12),
- a deformable restoring element (42) which is supported or can be supported in a carrier supporting region (62; 62') with regard to the carrier (12) and in a deflection mass supporting region (64) with regard to the deflection mass (34), a deflection of the deflection mass (34) out of a basic relative position with regard to the carrier (12) in at least one direction brings about a deformation of the restoring element (42),
- a supporting element (16; 16') which provides the carrier supporting region (62; 62') and is carried on the carrier (12) in a radially movable manner, it being possible for a spacing between the carrier supporting region (62; 62') and the deflection mass supporting region (64) to be varied by way of movement of the supporting element (16; 16') on the carrier (12), and the supporting element (16; 16') being prestressed in the direction of a radially inner base position (B_{L}), and, upon a rotation of the carrier (12) about the rotational axis (A), it being possible for the said supporting element (16; 16') to be moved counter to the prestress under the action of centrifugal force starting from the base position (B_{L}) radially outwards, **characterized in that** a radial spacing of the supporting element (16; 16') from the base position (B_{L}) increases in a degressive manner with an increasing action of centrifugal force at least in one rotational speed range (D_{U}-D_{O}), and/or **in that** a spring stiffness of the restoring element (42) increases in a progressive manner at least in one rotational speed range by way of movement of the supporting element (16; 16') radially outwards in a manner which is induced by centrifugal force.

2. Torsional vibration damping arrangement according to Claim 1, **characterized in that** a relationship between the rotational speed and the spring stiffness of the restoring element (42) has a parabolic profile.

3. Torsional vibration damping arrangement according to either of Claims 1 or 2, **characterized in that** the restoring element (42) comprises a restoring spring, preferably a leaf spring or a torsion spring, preferably with a substantially linear force characteristic curve (K₃).

4. Torsional vibration damping arrangement according to one of Claims 1 to 3, **characterized in that** the restoring element (42) is fixed with regard to the deflection mass (34) and/or with regard to the carrier (12).

5. Torsional vibration damper arrangement according to one of Claims 1 to 4, **characterized in that** the supporting element (16; 16') is loaded with a prestressing force in the base position (B_{L}).

6. Torsional vibration damping arrangement according to one of Claims 1 to 5, **characterized in that** the supporting element (16; 16') is assigned a prestressing arrangement (20), preferably a prestressing spring (20), which prestresses it in the direction of the base position (B_{L}).

7. Torsional vibration damping arrangement according to Claim 6, **characterized in that** the prestressing arrangement (20) has a progressive, preferably parabolic prestressing force characteristic curve (K₆).

8. Torsional vibration damping arrangement according to one of Claims 1 to 7, **characterized in that** a guide (14) for the supporting element (16; 16') is provided on the carrier (12), the supporting element (16; 16') being guided on the guide (14) such that it can be moved preferably substantially in the radial direction, preferably with circumferential movement play.

9. Torsional vibration damping arrangement according to one of Claims 1 to 8, **characterized in that** the supporting element (16; 16') has a circumferential supporting region (58, 60; 58', 60') on merely one circumferential side of the restoring element (42) in order to provide the carrier supporting region (62).

10. Torsional vibration damping arrangement according to Claim 9, **characterized in that** the supporting element (16) has a circumferential supporting region (58, 60) on both circumferential sides of the restoring element (42).

11. Torsional vibration damping arrangement according to Claim 10, **characterized in that** the restoring element (42) is arranged with circumferential movement play between the circumferential supporting regions (58, 60).

12. Torsional vibration damping arrangement according to one of Claims 1 to 11, **characterized in that** the supporting element (16; 16') has a through-passage opening (52) for the restoring element (42) and can be moved along the restoring element (42), a centre of mass (M) of the supporting element (16; 16') preferably lying in the region of the through-passage opening (52).

13. Torsional vibration damping arrangement according to one of Claims 1 to 12, **characterized in that** the at least one deflection mass pendulum unit (72; 72') is arranged in a housing (152) which is filled or can be filled with fluid.

14. Torsional vibration damping arrangement according to one of Claims 1 to 13, **characterized in that** the restoring element (42) extends substantially radially in the case of a deflection mass (34) which is positioned in a basic relative position with regard to the carrier (12).

15. Torsional vibration damping arrangement according to one of Claims 1 to 14, **characterized in that** a plurality of deflection mass pendulum units (72; 72') are provided preferably with a substantially homogeneous circumferential spacing from one another about the rotational axis (A).

16. Torsional vibration damping arrangement according to Claim 15, **characterized in that** the supporting elements (16; 16') of at least two, preferably all deflection mass pendulum units (72; 72') are carried on a common carrier (12) in a movable manner.

17. Torsional vibration damping arrangement according to Claim 15 or 16, **characterized in that** at least one deflection mass (34) provides a common deflection mass (34) for at least two, preferably all deflection mass pendulum units (72; 72').

18. Torsional vibration damping arrangement according to Claim 17, **characterized in that** the common deflection mass (34) comprises a deflection mass ring (30, 32, 28).

19. Drive train for a vehicle, comprising at least one torsional vibration damping arrangement (10) according to one of the preceding claims.

20. Drive train according to Claim 19, **characterized in that** the drive train (100) comprises a starting element, preferably a hydrodynamic torque converter (150) or a fluid coupling or a wet-running friction clutch or a dry friction clutch (132), and **in that** at least one torsional vibration damping arrangement (10) is provided in the region of the starting element.

21. Drive train according to Claim 20, **characterized in that** the starting element (150) comprises a turbine wheel (140), and **in that** the turbine wheel (140) provides at least one part of the deflection mass (30) of a torsional vibration damping arrangement (10).

22. Drive train according to Claim 19, 20 or 21, **characterized in that** the drive train (100) comprises at least one torsional vibration damper (110, 112; 132, 136) with a primary side and a secondary side which can be rotated with regard to the primary side counter to the restoring action of a damper spring arrangement (180, 184), at least one torsional vibration damping arrangement (10) being provided in the region of at least one torsional vibration damper (110, 112).

23. Drive train according to Claim 22, **characterized in that** two torsional vibration dampers (110, 112) are provided in series with respect to one another in the torque flow, a secondary side of one torsional vibration damper (110) being coupled to a primary side of the other torsional vibration damper (112) in order to provide an intermediate mass (114), at least one torsional vibration damping arrangement (10) being provided in the region of the intermediate mass (114).

## Revendications

1. Ensemble d'amortissement d'oscillations de torsion, de préférence pour la chaîne cinématique d'un véhicule, comprenant au moins une unité de pendule à masse de déviation (72 ; 72'), comprenant
- un support (12) pouvant tourner autour d'un axe de rotation (A),
- une masse de déviation (34) pouvant être déviée dans la direction périphérique autour de l'axe de rotation (A) par rapport au support (12),
- un élément de rappel déformable (42) supporté ou pouvant être supporté dans une région d'appui de support (62 ; 62') par rapport au support (12) et dans une région d'appui de masse de déviation (64) par rapport à la masse de déviation (34), une déviation de la masse de déviation (34) depuis une position de base relative par rapport au support (12) dans au moins une direction provoquant une déformation de l'élément de rappel (42),
- un élément d'appui (16 ; 16') supporté de manière déplaçable radialement sur le support (12) et fournissant la région d'appui de support (62 ; 62'), une distance entre la région d'appui de support (62 ; 62') et la région d'appui de masse de déviation (64) pouvant être modifiée par déplacement de l'élément d'appui (16 ; 16') sur le support (12) et l'élément d'appui (16 ; 16') étant précontraint dans la direction d'une position de base radialement interne (B_{L}), et pouvant être déplacé radialement vers l'extérieur lors de la rotation du support (12) autour de l'axe de rotation (A) à l'encontre de la précontrainte sous l'action de la force centrifuge à partir de la position de base (B_{L}), **caractérisé en ce qu'**au moins dans une plage de régime (D_{U}-D_{O}), une distance radiale de l'élément d'appui (16 ; 16') à la position de base (B_{L}) augmente de manière dégressive avec l'augmentation de l'action de la force centrifuge, et/ou **en ce que** par un déplacement dû à la force centrifuge de l'élément d'appui (16 ; 16') radialement vers l'extérieur, une rigidité de ressort de l'élément de rappel (42) augmente progressivement au moins dans une plage de régime.

2. Ensemble d'amortissement d'oscillations de torsion selon la revendication 1, **caractérisé en ce qu'**un rapport entre le régime et la rigidité de ressort de l'élément de rappel (42) présente une allure de type parabolique.

3. Ensemble d'amortissement d'oscillations de torsion selon l'une quelconque des revendications 1 ou 2, **caractérisé en ce que** l'élément de rappel (42) comprend un ressort de rappel, de préférence un ressort à lame ou un ressort à barre, de préférence avec une courbe caractéristique de force essentiellement linéaire (K₃).

4. Ensemble d'amortissement d'oscillations de torsion selon l'une quelconque des revendications 1 à 3, **caractérisé en ce que** l'élément de rappel (42) est fixé par rapport à la masse de déviation (34) et/ou par rapport au support (12).

5. Ensemble d'amortissement d'oscillations de torsion selon l'une quelconque des revendications 1 à 4, **caractérisé en ce que** l'élément d'appui (16 ; 16') est sollicité avec une force de précontrainte dans la position de base (B_{L}).

6. Ensemble d'amortissement d'oscillations de torsion selon l'une quelconque des revendications 1 à 5, **caractérisé en ce qu'**à l'élément d'appui (16 ; 16') est associé un agencement de précontrainte (20), de préférence un ressort de précontrainte (20), précontraignant l'élément d'appui (16 ; 16') dans la direction de la position de base (B_{L}).

7. Ensemble d'amortissement d'oscillations de torsion selon la revendication 6, **caractérisé en ce que** l'agencement de précontrainte (20) présente une courbe caractéristique de force de précontrainte progressive (K₆), de préférence de type parabolique.

8. Ensemble d'amortissement d'oscillations de torsion selon l'une quelconque des revendications 1 à 7, **caractérisé en ce qu'**un guide (14) pour l'élément d'appui (16 ; 16') est prévu sur le support (12), l'élément d'appui (16 ; 16') étant guidé sur le guide (14) de préférence de manière déplaçable essentiellement dans la direction radiale, de préférence avec un jeu de déplacement périphérique.

9. Ensemble d'amortissement d'oscillations de torsion selon l'une quelconque des revendications 1 à 8, **caractérisé en ce que** l'élément d'appui (16 ; 16'), pour fournir la région d'appui de support (62), présente une région d'appui périphérique (58, 60 ; 58', 60') au niveau de seulement un côté périphérique de l'élément de rappel (42).

10. Ensemble d'amortissement d'oscillations de torsion selon la revendication 9, **caractérisé en ce que** l'élément d'appui (16) présente une région d'appui périphérique (58, 60) au niveau des deux côtés périphériques de l'élément de rappel (42).

11. Ensemble d'amortissement d'oscillations de torsion selon la revendication 10, **caractérisé en ce que** l'élément de rappel (42) est disposé avec un jeu de déplacement périphérique entre les régions d'appui périphériques (58, 60).

12. Ensemble d'amortissement d'oscillations de torsion selon l'une quelconque des revendications 1 à 11, **caractérisé en ce que** l'élément d'appui (16 ; 16') présente une ouverture de passage (52) pour l'élément de rappel (42) et peut être déplacé le long de l'élément de rappel (42), un centre de gravité de masse (M) de l'élément d'appui (16 ; 16') étant de préférence situé dans la région de l'ouverture de passage (52).

13. Ensemble d'amortissement d'oscillations de torsion selon l'une quelconque des revendications 1 à 12, **caractérisé en ce que** l'au moins une unité de pendule à masse de déviation (72 ; 72') est disposée dans un boîtier (152) rempli ou pouvant être rempli de fluide.

14. Ensemble d'amortissement d'oscillations de torsion selon l'une quelconque des revendications 1 à 13, **caractérisé en ce que** dans le cas d'une masse de déviation (34) positionnée dans une position de base relative par rapport au support (12), l'élément de rappel (42) s'étend essentiellement radialement.

15. Ensemble d'amortissement d'oscillations de torsion selon l'une quelconque des revendications 1 à 14, **caractérisé en ce qu'**une pluralité d'unités de pendule à masse de déviation (72 ; 72') est de préférence prévue avec une distance périphérique essentiellement uniforme les unes par rapport aux autres autour de l'axe de rotation (A).

16. Ensemble d'amortissement d'oscillations de torsion selon la revendication 15, **caractérisé en ce que** les éléments d'appui (16 ; 16') sont portés de manière déplaçable au niveau d'un support commun (12) par au moins deux, de préférence par toutes les unités de pendule à masse de déviation (72 ; 72').

17. Ensemble d'amortissement d'oscillations de torsion selon la revendication 15 ou 16, **caractérisé en ce qu'**au moins une masse de déviation (34) fournit une masse de déviation commune (34) pour au moins deux, de préférence pour toutes les unités de pendule à masse de déviation (72 ; 72').

18. Ensemble d'amortissement d'oscillations de torsion selon la revendication 17, **caractérisé en ce que** la masse de déviation commune (34) comprend une bague de masse de déviation (30, 32, 28).

19. Chaîne cinématique pour un véhicule, comprenant au moins un ensemble d'amortissement d'oscillations de torsion (10) selon l'une quelconque des revendications précédentes.

20. Chaîne cinématique selon la revendication 19, **caractérisée en ce que** la chaîne cinématique (100) comprend un élément de démarrage, de préférence un convertisseur de couple hydrodynamique (150) ou un accouplement fluidique ou un embrayage à friction humide ou un embrayage à friction sec (132) et **en ce qu'**au moins un ensemble d'amortissement d'oscillations de torsion (10) est prévu dans la région de l'élément de démarrage.

21. Chaîne cinématique selon la revendication 20, **caractérisée en ce que** l'élément de démarrage (150) comprend une roue de turbine (140) et **en ce que** la roue de turbine (140) fournit au moins une partie de la masse de déviation (30) d'un ensemble d'amortissement d'oscillations de torsion (10).

22. Chaîne cinématique selon la revendication 19, 20 ou 21, **caractérisée en ce que** la chaîne cinématique (100) comprend au moins un amortisseur d'oscillations de torsion (110, 112 ; 132, 136) avec un côté primaire et un côté secondaire pouvant tourner par rapport au côté primaire à l'encontre de l'effet de rappel d'un ensemble de ressort d'amortissement (180, 184), au moins un ensemble d'amortissement d'oscillations de torsion (10) étant prévu dans la région d'au moins un amortisseur d'oscillations de torsion (110, 112).

23. Chaîne cinématique selon la revendication 22, **caractérisée en ce que** deux amortisseurs d'oscillations de torsion (110, 112) sont prévus en série l'un par rapport à l'autre dans le flux de couple, un côté secondaire de l'amortisseur d'oscillations de torsion (110) étant accouplé à un côté primaire de l'autre amortisseur d'oscillations de torsion (112) pour fournir une masse intermédiaire (114), au moins un ensemble d'amortissement d'oscillations de torsion (10) étant prévu dans la région de la masse intermédiaire (114).
